# EUROPEAN PATENT SPECIFICATION

(11) **EP 4 390 655 B1**
(45) Date of publication and mention of the grant of the patent: **22.07.2026**
(21) Application number: 22885806.4
(22) Date of filing: 21.10.2022
(51) Int. Cl.: G06F 3/14, G06F 1/3234, G06F 1/3293, G06F 9/451, G06F 1/3206

(54) **ALWAYS-ON DISPLAY METHOD AND TERMINAL DEVICE**
IMMER EINGESCHALTETES ANZEIGEVERFAHREN UND ENDGERÄTEVORRICHTUNG
PROCÉDÉ D'AFFICHAGE TOUJOURS ACTIF SUR LA BASE ET ÉQUIPEMENT TERMINAL

(30) Priority: 25.10.2021 CN 202111243603
(43) Date of publication of application: 26.06.2024
(73) Proprietor: Huawei Technologies Co., Ltd., Shenzhen, Guangdong 518129 (CN)
(72) Inventor: CHEN, Ke, Shenzhen, Guangdong 518129 (CN); ZHANG, Ming, Shenzhen, Guangdong 518129 (CN)
(74) Representative: MERH-IP Matias Erny Reichl Hoffmann Patentanwälte PartG mbB
(86) International application number: PCT/CN2022/126647
(87) International publication number: WO 2023/071929

(56) References cited:
- EP-A1- 3 447 608
- EP-A1- 3 958 109
- WO-A1-2021/057673
- WO-A1-2021/157819
- CN-A- 108 227 895
- CN-A- 110 286 865
- CN-A- 111 966 436

## Description

### TECHNICAL FIELD

This application relates to the field of terminals and communication technologies, and in particular, to an always-on display method and a terminal device.

### BACKGROUND

In a screen-off scenario, namely, a standby scenario, of a terminal device, a screen may still display information such as time, a date, a personalized pattern, and a notification. This is referred to as screen-off always-on or always-on display (Always-On Display, AOD) for short.

In a conventional AOD function, when a mobile phone is screen-off, a view or an image displayed through the always-on display needs to be sent to the screen before an application processor (AP) sleeps. If content that needs to be displayed through the always-on display is an animation, the AP needs to be periodically woken up to refresh dynamic information in the view in a process of playing the animation through the always-on display. For example, if a clock is displayed through the always-on display, the AP needs to be woken up every minute to refresh information such as the time and the date in the view.

As a result, the AP is not in a sleep state most of the time, and power consumption of the terminal device during a screen-off period is increased.

Document WO 2021/157819 A1 generally discloses a method for reducing degradation of a display of an electronic device, the method including determining whether the display is in a low-power display mode for displaying an always on display (AOD) screen, identifying content of a first screen displayed on the display, when the display displays the AOD screen, detecting a folding angle of the display, generating a second screen by reorganizing the first screen based on the folding angle, and displaying the second screen on the display.
Document EP 3 447 608 A1 generally discloses a method and an apparatus for updating information in the field of image displaying in the present invention. The method includes: in an AOD mode, determining a target update information format corresponding to a type of a content to be updated, where the type of the content to be updated includes time and/or picture, and different update information formats correspond to different types of contents to be updated; generating, based on the content to be updated and the target update information format, update information corresponding to the content to be updated; and controlling a screen to update the content to be updated based on the update information and to display the updated content.

### SUMMARY

This application provides an always-on display method and a terminal device, to reduce power consumption of always-on display of the terminal device. In particular, this application provides an always-on display method, a terminal device, a chip system, a computer program product, and a computer-readable storage medium, having the features of respective independent claims. The dependent claims relate to preferred embodiments.

According to a first aspect, this application provides an always-on display method, including: A terminal device parses a first screen-off style into N sets of always-on display resources based on a plurality of displayable screen statuses, where one set of always-on display resources match one displayable screen status, and N is a positive integer greater than 1; the terminal device obtains a first always-on display resource that is in the N sets of always-on display resources and that matches a first screen status when determining that the terminal device is screen-off and a current screen status is the first screen status, where the first screen status is a screen status of the plurality of displayable screen statuses; and the terminal device displays the first always-on display resource through always-on display.

In the foregoing embodiment, the terminal may pre-parse the N sets of always-on display resources corresponding to various displayable screen statues of the terminal device. When the terminal is screen-off and determines that the current screen status is the first screen status, the terminal does not need to immediately re-parse the always-on display resource. The terminal device only needs to obtain the first always-on display resource that matches the current first screen status from the N sets of always-on display resources obtained through parsing, to perform always-on display. This greatly reduces power consumption of the always-on display of the terminal.

With reference to some embodiments of the first aspect, in some embodiments, the first screen-off style is content that is configured to be displayed through the always-on display when the terminal device is in a screen-off state.

With reference to some embodiments of the first aspect, in some embodiments, the plurality of displayable screen statuses are displayable screen statuses supported by the terminal device.

With reference the first aspect, the terminal device includes an application processor and a low-power coprocessor. That a terminal device parses a first screen-off style into N sets of always-on display resources based on a plurality of displayable screen statuses specifically includes: The application processor parses the first screen-off style into the N sets of always-on display resources based on the plurality of displayable screen statuses; and the method further includes: The terminal device stores the N sets of always-on display resources to obtain a first storage address. That the terminal device obtains a first always-on display resource that is in the N sets of always-on display resources and that matches a first screen status when determining that the terminal device is screen-off and a current screen status is the first screen status specifically includes: When the low-power coprocessor determines that the terminal device is screen-off and the current screen status is the first screen status, the low-power coprocessor obtains the first always-on display resource that matches the first screen status from storage space to which the first storage address points. That the terminal device displays the first always-on display resource through always-on display specifically includes: The low-power coprocessor sends the first always-on display resource to a screen for display.

In the foregoing embodiment, the application processor parses the first screen-off style into the N sets of always-on display resources based on the plurality of displayable screen statues and stores the N sets of always-on display resources, and the low-power coprocessor determines the current screen status, and obtains and displays the first always-on display resource that matches the current screen status, thereby further reducing power consumption of the always-on display.

With reference to the first aspect, after the step that the terminal device displays the first always-on display resource through always-on display, the method further includes: The terminal device determines that the current screen status is a second screen status in response to a screen folding and/or rotation operation performed by a user when the terminal device is in the screen-off state, where the second screen status is a screen status that is in the plurality of displayable screen statuses and that is different from the first screen status; the terminal device obtains a second always-on display resource that is in the N sets of always-on display resources and that matches the second screen status; and the terminal device updates the always-on display to display the second always-on display resource.

In the foregoing embodiment, in an always-on display process, if the current screen status of the terminal device changes, only the parsed first always-on display resource that matches the changed current screen status needs to be obtained for display, and the always-on display resource does not need to be re-parsed. Therefore, power consumption of the terminal device during the always-on display can be greatly reduced.

With reference to some embodiments of the first aspect, in some embodiments, that the terminal device determines that the current screen status is a second screen status in response to a screen folding and/or rotation operation performed by a user when the terminal device is in the screen-off state specifically includes: The low-power coprocessor determines that the current screen status is the second screen status in response to the screen folding and/or rotation operation performed by the user when the terminal device is in the screen-off state. That the terminal device obtains a second always-on display resource that is in the N sets of always-on display resources and that matches the second screen status specifically includes: The low-power coprocessor obtains the second always-on display resource that matches the second screen status from the storage space to which the first storage address points. That the terminal device updates the always-on display to display the second always-on display resource specifically includes: The low-power coprocessor sends the second always-on display resource to the screen for display.

In the foregoing embodiment, in the always-on display process, determining the current screen status and obtaining the matched second always-on display resource for display are both performed by the low-power coprocessor, and the application processor does not need to be woken up, thereby further reducing power consumption of the terminal device during the always-on display.

With reference to some embodiments of the first aspect, in some embodiments, the terminal device includes a sensor; and that the low-power coprocessor determines that the current screen status is the second screen status in response to the screen folding and/or rotation operation performed by the user when the terminal device is in the screen-off state specifically includes: The sensor generates a screen folding and/or rotation event in response to the screen folding and/or rotation operation performed by the user when the terminal device is in the screen-off state; and the low-power coprocessor determines that the current screen status is the second screen status in response to the screen folding and/or rotation event.

In the foregoing embodiment, the low-power coprocessor directly responds to the screen folding and/or rotation event generated by the sensor, and can determine the screen status without waking up the application processor. This reduces power consumption of the always-on display, and can quickly determine the current screen status. This improves efficiency of responding to a screen status change in the always-on display process.

With reference to some embodiments of the first aspect, in some embodiments, an always-on display application is installed on the terminal device, and a listening registration status of the always-on display application for the screen folding and/or rotation event in the terminal device is screen-off state listening; and after the step that the sensor generates a screen folding and/or rotation event, the method further includes: when the terminal device is in the screen-off state, receiving the screen folding and/or rotation event by the always-on display application running on the low-power coprocessor.

In the foregoing embodiment, during installation, the application is registered for a listening state in the screen-off state, and an application related to the always-on display may be registered for the screen-off state listening. In this way, in the screen-off state, the application that is registered for the screen-off state listening may receive the screen folding and/or rotation event generated by the sensor, so that the application can run normally in the screen-off state.

With reference to some embodiments of the first aspect, in some embodiments, a first application is installed on the terminal device, and a registration listening status for the screen folding and/or rotation event in the terminal device by the first application is screen-on state listening; and when the terminal device is in the screen-off state, after the sensor generates the screen folding and/or rotation event, the first application does not receive the screen folding and/or rotation event.

In the foregoing embodiment, the application registered for the screen-on state listening does not receive, in the screen-off state, the screen folding and/or rotation event generated by the sensor, thereby reducing unnecessary signaling exchange in the terminal in the screen-off state. This also prevents an application irrelevant to the screen-off state from being woken up in the screen-off state to perform some meaningless operations, and greatly reduces power consumption of the terminal during the always-on display.

With reference to some embodiments of the first aspect, in some embodiments, the method further includes: When the terminal device is in the screen-off state, the terminal device does not respond to a view refresh request sent by the first application.

In the foregoing embodiment, in the screen-off state, the terminal does not respond to the view refresh request sent by the first application that is irrelevant to the screen-off state. This prevents from performing an operation that does not produce an effect in the screen-off state, and further reduces power consumption of the terminal during the always-on display.

With reference to some embodiments of the first aspect, in some embodiments, when the current screen status of the terminal device is the first screen status, after the terminal device is clockwise rotated by 90 degrees, the current screen status of the terminal device is updated to the second screen status.

With reference to some embodiments of the first aspect, in some embodiments, the first always-on display resource includes a first image, the first image includes a first object, and a direction of the first object in the first image is a first direction; the second always-on display resource includes a second image, the second image includes the first object, and a direction of the first object in the second image is a second direction; and the first direction is clockwise rotated by 90 degrees to be the second direction.

In the foregoing embodiment, different always-on display resources correspond to different current screen statues. This ensures an always-on display effect when the current screen status of the terminal changes.

With reference to some embodiments of the first aspect, in some embodiments, that the terminal device stores the N sets of always-on display resources to obtain a first storage address specifically includes: The terminal device downsamples the N sets of always-on display resources based on a preset zoom ratio, and stores the N sets of downsampled always-on display resources, to obtain the first storage address; and that the terminal device displays the first always-on display resource through always-on display specifically includes: the terminal device zooms in, based on the preset zoom ratio, the fetched first always-on display resource, and displays the zoomed-in first always-on display resource through the always-on display.

In the foregoing embodiment, the always-on display resource may be downsampled and stored, and then zoomed in during display. This ensures the always-on display effect and reduces occupation of a storage resource of the terminal by the always-on display resource.

With reference to some embodiments of the first aspect, in some embodiments, the first storage address includes one storage address; or the first storage address includes N storage addresses; or the first storage address includes N*M storage addresses, where M is a quantity of images in one set of always-on display resources.

With reference to some embodiments of the first aspect, in some embodiments, the method further includes: The terminal device generates a screen-off event in response to a screen-off operation of a user; and/or if determining that a preset screen-off condition is met, the terminal device generates a screen-off event.

According to a second aspect, embodiments of this application provide a terminal device, including one or more processors and a memory. The memory is coupled to the one or more processors, the memory is configured to store computer program code, the computer program code includes computer instructions, and the one or more processors invoke the computer instructions to enable the terminal device to perform: parsing a first screen-off style into N sets of always-on display resources based on a plurality of displayable screen statuses, where one set of always-on display resources match one displayable screen status, and N is a positive integer greater than 1; obtaining a first always-on display resource that is in the N sets of always-on display resources and that matches a first screen status when determining that the terminal device is screen-off and a current screen status is the first screen status, where the first screen status is a screen status of the plurality of displayable screen statuses; and displaying the first always-on display resource through always-on display.

With reference to some embodiments of the second aspect, in some embodiments, the first screen-off style is content that is configured to be displayed through the always-on display when the terminal device is in a screen-off state.

With reference to some embodiments of the second aspect, in some embodiments, the plurality of displayable screen statuses are displayable screen statuses supported by the terminal device.

With reference to some embodiments of the second aspect, in some embodiments, the one or more processors include an application processor and a low-power coprocessor. The application processor is specifically configured to: parse the first screen-off style into the N sets of always-on display resources based on the plurality of displayable screen statuses; the application processor is further configured to invoke the computer instructions to enable the terminal device to perform: storing the N sets of always-on display resources to the memory, to obtain a first storage address; and the low-power processor is specifically configured to: when determining that the terminal device is screen-off and the current screen status is the first screen status, obtain the first always-on display resource that matches the first screen status from storage space to which the first storage address points; and send the first always-on display resource to a screen for display.

With reference to some embodiments of the second aspect, in some embodiments, the one or more processors are further configured to invoke the computer instructions to enable the terminal device to perform: determining that the current screen status is a second screen status in response to a screen folding and/or rotation operation performed by a user when the terminal device is in the screen-off state, where the second screen status is a screen status that is in the plurality of displayable screen statuses and that is different from the first screen status; obtaining a second always-on display resource that is in the N sets of always-on display resources and that matches the second screen status; and updating the always-on display to display the second always-on display resource.

With reference to some embodiments of the second aspect, in some embodiments, the low-power processor is specifically configured to: determine that the current screen status is the second screen status in response to the screen folding and/or rotation operation performed by the user when the terminal device is in the screen-off state; obtain the second always-on display resource that matches the second screen status from the storage space to which the first storage address points; and send the second always-on display resource to the screen for display.

With reference to some embodiments of the second aspect, in some embodiments, the terminal device includes a sensor, configured to: generate a screen folding and/or rotation event in response to the screen folding and/or rotation operation performed by the user when the terminal device is in the screen-off state; and the low-power processor is specifically configured to: determine that the current screen status is the second screen status in response to the screen folding and/or rotation event.

With reference to some embodiments of the second aspect, in some embodiments, an always-on display application is installed on the terminal device, and a listening registration status of the always-on display application for the screen folding and/or rotation event in the terminal device is screen-off state listening; and the low-power processor is further configured to: when the terminal device is in the screen-off state, receive the screen folding and/or rotation event by the always-on display application running.

With reference to some embodiments of the second aspect, in some embodiments, a first application is installed on the terminal device, and a registration listening status for the screen folding and/or rotation event in the terminal device by the first application is screen-on state listening; and the low-power processor is further configured to: when the terminal device is in the screen-off state, after the sensor generates the screen folding and/or rotation event, not receive the screen folding and/or rotation event by the first application that is running.

With reference to some embodiments of the second aspect, in some embodiments, the one or more processors are further configured to invoke the computer instructions to enable the terminal device to perform: when the terminal device is in the screen-off state, not responding to a view refresh request sent by the first application.

With reference to some embodiments of the second aspect, in some embodiments, the one or more processors are further configured to invoke the computer instructions to enable the terminal device to perform: when the current screen status of the terminal device is the first screen status, after the terminal device is clockwise rotated by 90 degrees, updating the current screen status of the terminal device to the second screen status.

With reference to some embodiments of the second aspect, in some embodiments, the first always-on display resource includes a first image, the first image includes a first object, and a direction of the first object in the first image is a first direction; the second always-on display resource includes a second image, the second image includes the first object, and a direction of the first object in the second image is a second direction; and the first direction is clockwise rotated by 90 degrees to be the second direction.

With reference to some embodiments of the second aspect, in some embodiments, the one or more processors are specifically configured to invoke the computer instructions to enable the terminal device to perform: downsampling the N sets of always-on display resources based on a preset zoom ratio, and storing the N sets of downsampled always-on display resources, to obtain the first storage address; and zooming in, based on the preset zoom ratio, the fetched first always-on display resource, and displaying the zoomed-in first always-on display resource through the always-on display.

With reference to some embodiments of the second aspect, in some embodiments, the first storage address includes one storage address; or the first storage address includes N storage addresses; or the first storage address includes N*M storage addresses, where M is a quantity of images in one set of always-on display resources.

With reference to some embodiments of the second aspect, in some embodiments, the one or more processors are further configured to invoke the computer instructions to enable the terminal device to perform: generating a screen-off event in response to a screen-off operation of a user; and/or if determining that a preset screen-off condition is met, generating a screen-off event.

According to a third aspect, embodiments of this application provide a terminal device, including: a parsing module, configured to parse a first screen-off style into N sets of always-on display resources based on a plurality of displayable screen statuses, where one set of always-on display resources match one displayable screen status, and N is a positive integer greater than 1; a first obtaining module, configured to: when determining that the terminal device is screen-off and a current screen status is a first screen status, obtain a first always-on display resource that is in the N sets of always-on display resources and that matches the first screen status, where the first screen status is a screen status of the plurality of displayable screen statuses; and a first display module, configured to display the first always-on display resource through always-on display.

With reference to some embodiments of the third aspect, in some embodiments, the first screen-off style is content that is configured to be displayed through the always-on display when the terminal device is in a screen-off state.

With reference to some embodiments of the third aspect, in some embodiments, the plurality of displayable screen statuses are displayable screen statuses supported by the terminal device.

With reference to some embodiments of the third aspect, in some embodiments, the terminal device includes an application processor and a low-power coprocessor. The parsing module is specifically configured to parse, by using the application processor, the first screen-off style into the N sets of always-on display resources based on the plurality of displayable screen statuses. The terminal device further includes a storage module, configured to store the N sets of always-on display resources to obtain a first storage address. The obtaining module is specifically configured to: when the low-power coprocessor determines that the terminal device is screen-off and the current screen status is the first screen status, obtain, by using the low-power coprocessor, the first always-on display resource that matches the first screen status from storage space to which the first storage address points. The display module is specifically configured to send, by using the low-power coprocessor, the first always-on display resource to a screen for display.

With reference to some embodiments of the third aspect, in some embodiments, the terminal device further includes: a status determining module, configured to determine that the current screen status is a second screen status in response to a screen folding and/or rotation operation performed by a user when the terminal device is in the screen-off state, where the second screen status is a screen status that is in the plurality of displayable screen statuses and that is different from the first screen status; a second obtaining module, configured to obtain a second always-on display resource that is in the N sets of always-on display resources and that matches the second screen status; and a second display module, configured to update the always-on display to display the second always-on display resource.

With reference to some embodiments of the third aspect, in some embodiments, the status determining module is specifically configured to determine that the current screen status is the second screen status in response to the screen folding and/or rotation operation performed by the user when the terminal device is in the screen-off state and by using the low-power coprocessor; the second obtaining module is specifically configured to obtain, by using the low-power coprocessor, the second always-on display resource that matches the second screen status from the storage space to which the first storage address points; and the second display module is specifically configured to send, by using the low-power coprocessor, the second always-on display resource to the screen for display.

With reference to some embodiments of the third aspect, in some embodiments, the terminal device includes a sensor, configured to generate a screen folding and/or rotation event in response to the screen folding and/or rotation operation performed by the user when the terminal device is in the screen-off state; and the status determining module is specifically configured to determine that the current screen status is the second screen status in response to the screen folding and/or rotation event and by using the low-power coprocessor.

With reference to some embodiments of the third aspect, in some embodiments, an always-on display application is installed on the terminal device, and a listening registration status of the always-on display application for the screen folding and/or rotation event in the terminal device is screen-off state listening; and the terminal device further includes a receiving module, configured to: when the terminal device is in the screen-off state, receive the screen folding and/or rotation event by using the always-on display application running on the low-power coprocessor.

With reference to some embodiments of the third aspect, in some embodiments, a first application is installed on the terminal device, and a registration listening status for the screen folding and/or rotation event in the terminal device by the first application is screen-on state listening; and the receiving module is further configured to: when the terminal device is in the screen-off state, after the sensor generates the screen folding and/or rotation event, not receive the screen folding and/or rotation event by the first application running on the low-power processor.

With reference to some embodiments of the third aspect, in some embodiments, the terminal device further includes: a response rejection module, configured to: when the terminal device is in the screen-off state, not respond to a view refresh request sent by the first application.

With reference to some embodiments of the third aspect, in some embodiments, when the current screen status of the terminal device is the first screen status, after the terminal device is clockwise rotated by 90 degrees, the current screen status of the terminal device is updated to the second screen status.

With reference to some embodiments of the third aspect, in some embodiments, the first always-on display resource includes a first image, the first image includes a first object, and a direction of the first object in the first image is a first direction; the second always-on display resource includes a second image, the second image includes the first object, and a direction of the first object in the second image is a second direction; and the first direction is clockwise rotated by 90 degrees to be the second direction.

With reference to some embodiments of the third aspect, in some embodiments, the storage module is specifically configured to downsample the N sets of always-on display resources based on a preset zoom ratio, and store the N sets of downsampled always-on display resources, to obtain the first storage address; and the first display module is specifically configured to zoom in, based on the preset zoom ratio, the fetched first always-on display resource, and display the zoomed-in first always-on display resource through the always-on display.

With reference to some embodiments of the third aspect, in some embodiments, the first storage address includes one storage address; or the first storage address includes N storage addresses; or the first storage address includes N*M storage addresses, where M is a quantity of images in one set of always-on display resources.

With reference to some embodiments of the third aspect, in some embodiments, the terminal device further includes a screen-off event generation module, configured to: generate a screen-off event in response to a screen-off operation of a user; and/or if determining that a preset screen-off condition is met, generate a screen-off event.

According to a fourth aspect, an embodiment of this application provides a chip system. The chip system is applied to a terminal device. The chip system includes one or more processors. The processor is configured to invoke computer instructions to enable the terminal device to perform the method described in any one of the first aspect or the possible implementations of the first aspect.

According to a fifth aspect, an embodiment of this application provides a computer program product including instructions. When the computer program product runs on a terminal device, the terminal device is enabled to perform the method described in any one of the first aspect or the possible implementations of the first aspect.

According to a sixth aspect, an embodiment of this application provides a computer-readable storage medium including instructions. When the instructions are run on a terminal device, the terminal device is enabled to perform the method described in any one of the first aspect or the possible implementations of the first aspect.

It may be understood that the terminal device provided in the second aspect, the terminal device provided in the third aspect, the chip system provided in the fourth aspect, the computer program product provided in the fifth aspect, and the computer storage medium provided in the sixth aspect are all configured to perform the methods provided in embodiments of this application. Therefore, for beneficial effects that can be achieved, refer to beneficial effects in the corresponding methods. Details are not described herein again.

### BRIEF DESCRIPTION OF DRAWINGS

FIG. 1 is an example schematic diagram of displaying a clock through always-on display by a terminal device;
FIG. 2(a) to FIG. 2(d) are an example schematic diagram of four different displayable screen statuses of a single-screen tablet terminal according to an embodiment of this application;
FIG. 3 is an example schematic diagram of folding and unfolding a dual-screen inward foldable terminal according to an embodiment of this application;
FIG. 4 is an example schematic diagram of folding and unfolding a dual-screen outward foldable terminal according to an embodiment of this application;
FIG. 5a is an example schematic diagram in which a display effect is poor because an always-on display resource is not updated after a screen is rotated according to an embodiment of this application;
FIG. 5b is an example schematic diagram in which a display effect is poor because a screen origin changes after a screen is folded inward according to an embodiment of this application;
FIG. 6 is an example schematic diagram in which four sets of always-on display resources respectively correspond to four different displayable screen statuses of a single-screen tablet terminal according to an embodiment of this application;
FIG. 7 is an example schematic diagram in which different always-on display resources correspond to different origin locations according to an embodiment of this application;
FIG. 8 is a schematic diagram of a software architecture of a terminal device according to an embodiment of this application;
FIG. 9A to FIG. 9C are a schematic diagram of information exchange of always-on display according to an embodiment of this application;

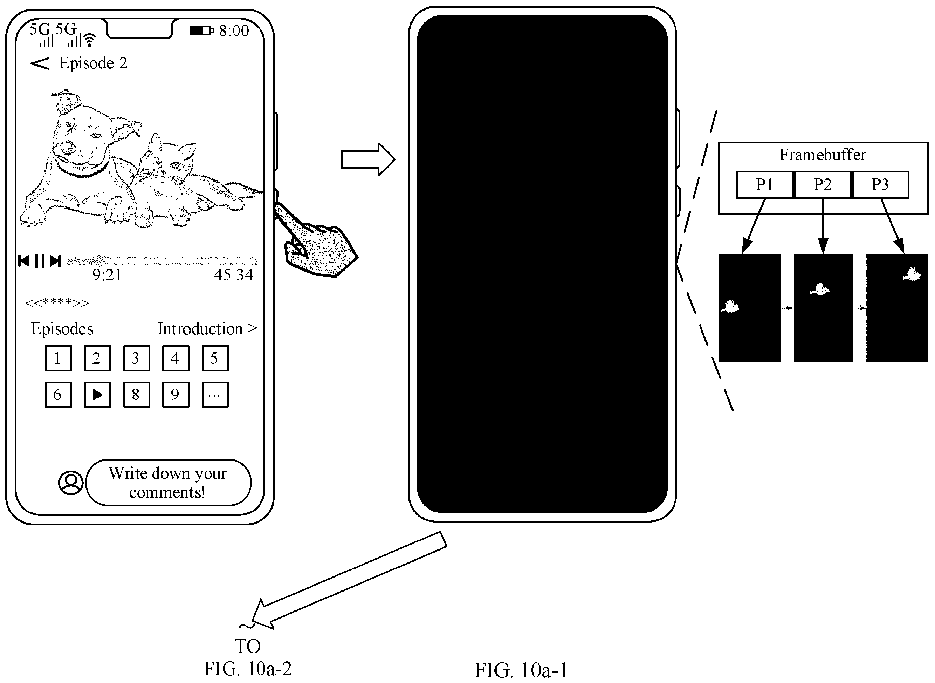

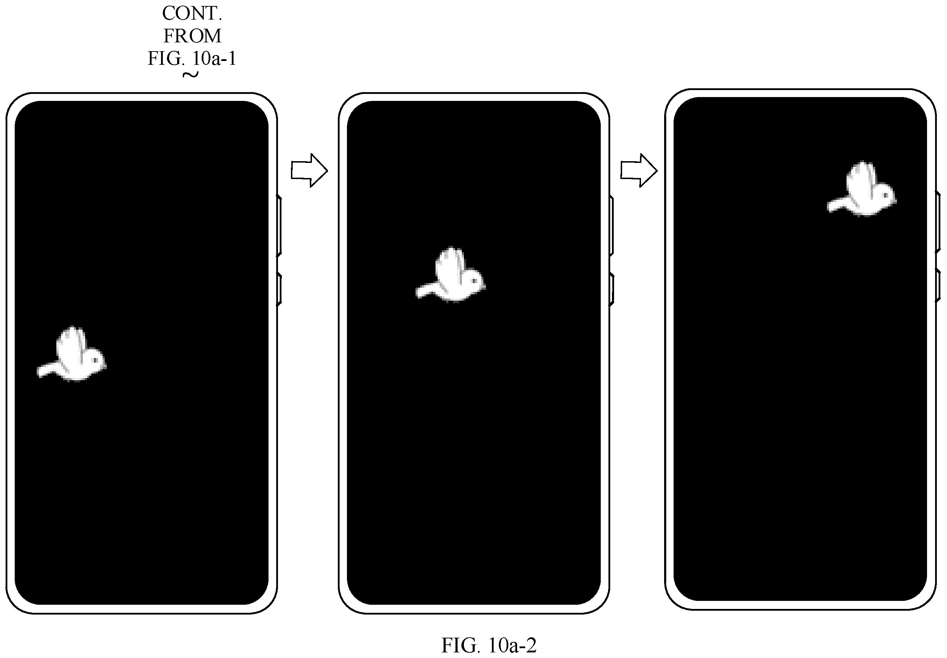

FIG. 10a-1 and FIG. 10a-2 are a schematic diagram of an example always-on display scenario according to an embodiment of this application;

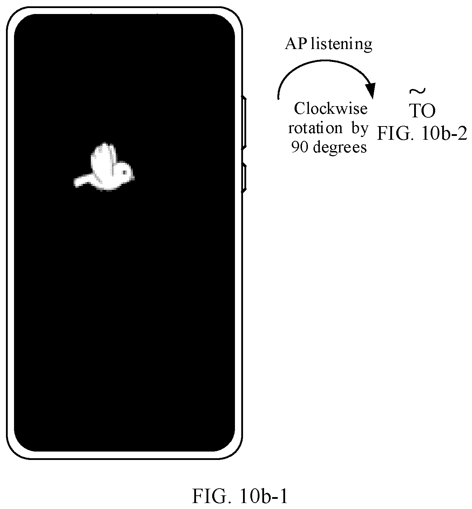

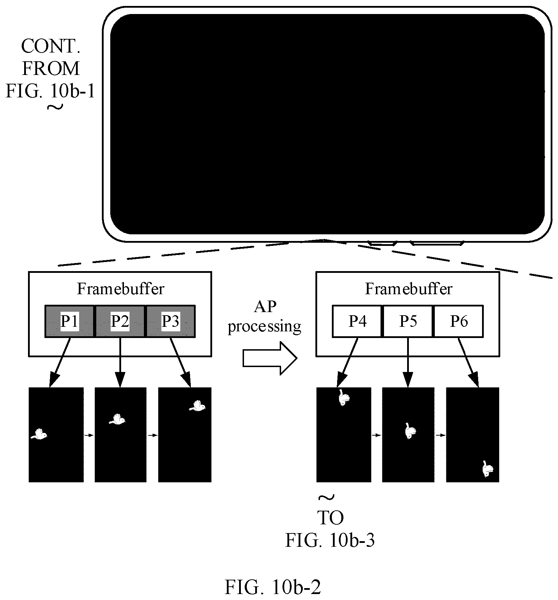

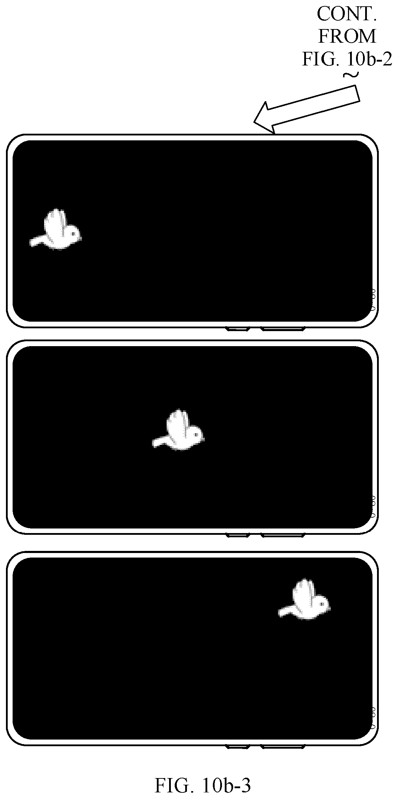

FIG. 10b-1 to FIG. 10b-3 are a schematic diagram of another example always-on display scenario according to an embodiment of this application;

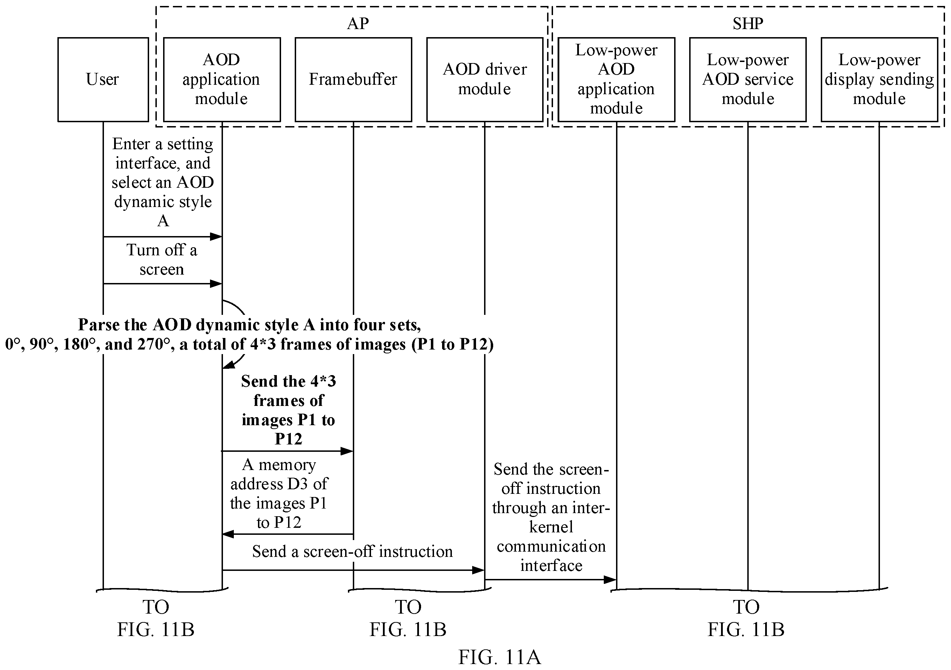

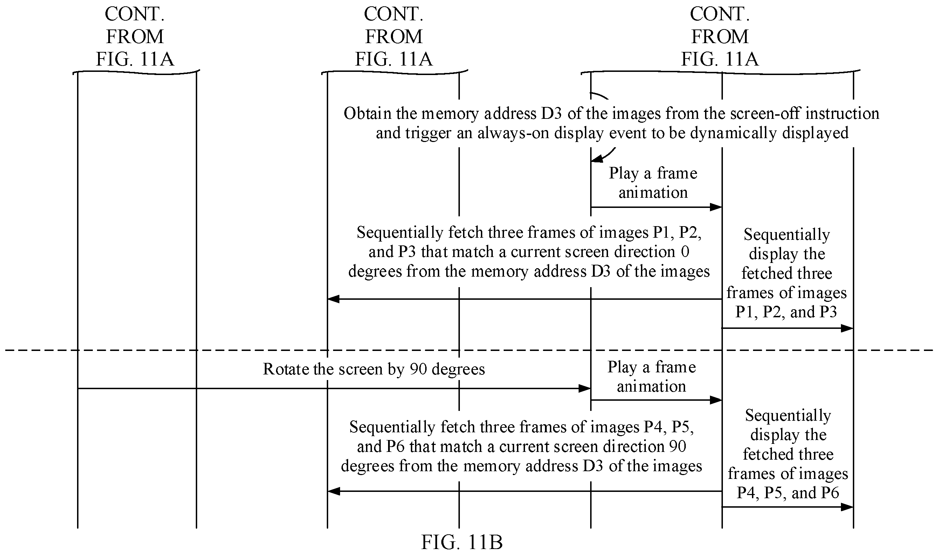

FIG. 11A and FIG. 11B are a schematic diagram of information exchange of other always-on display according to an embodiment of this application;

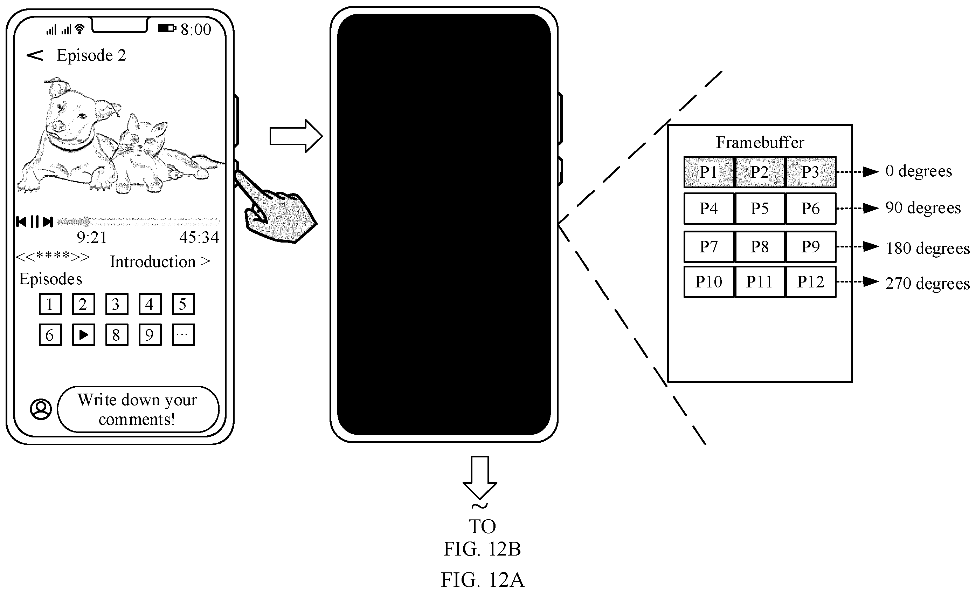

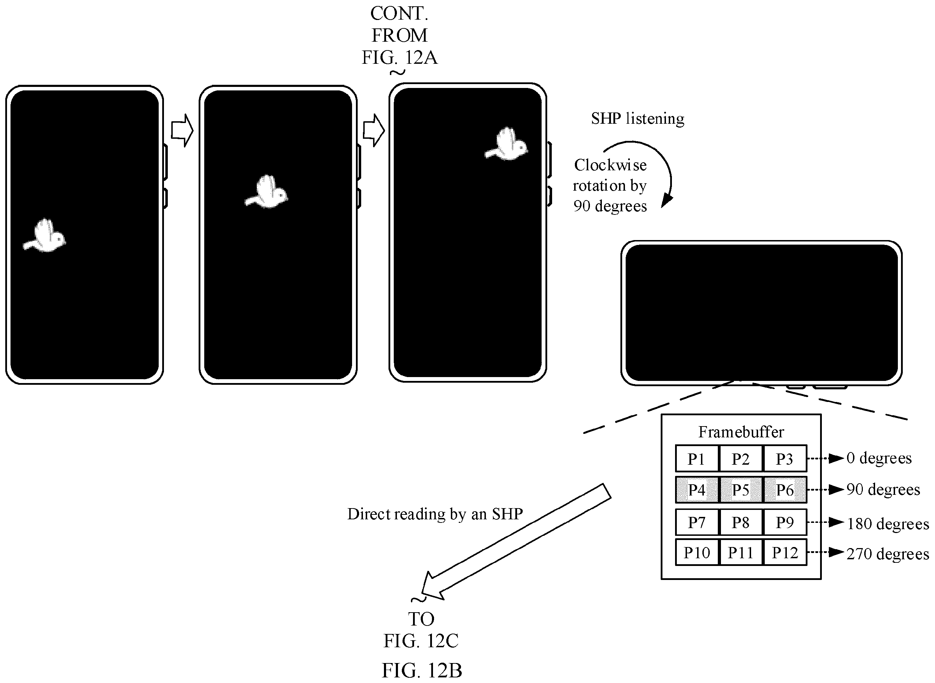

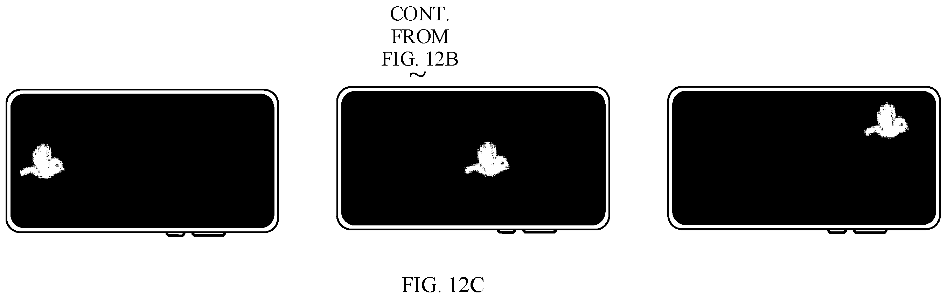

FIG. 12A to FIG. 12C are a schematic diagram of another example always-on display scenario according to an embodiment of this application;

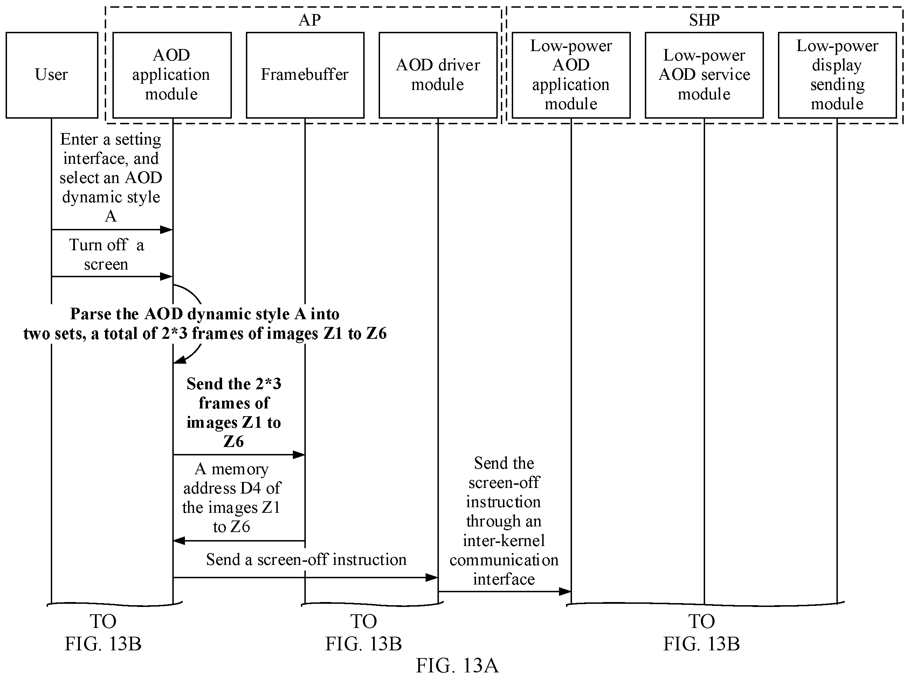

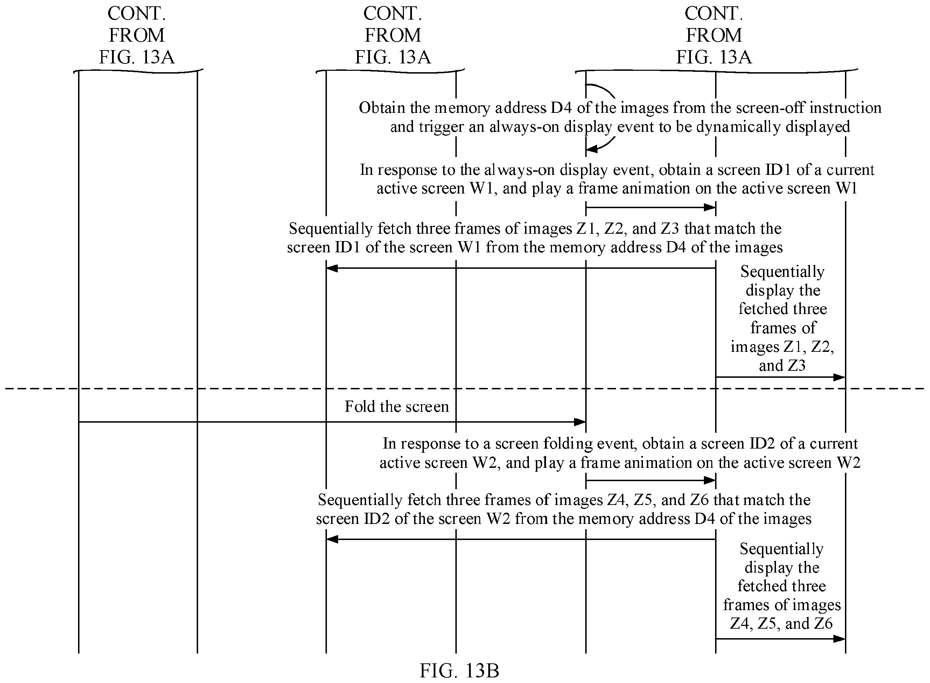

FIG. 13A and FIG. 13B are a schematic diagram of information exchange of other always-on display according to an embodiment of this application;

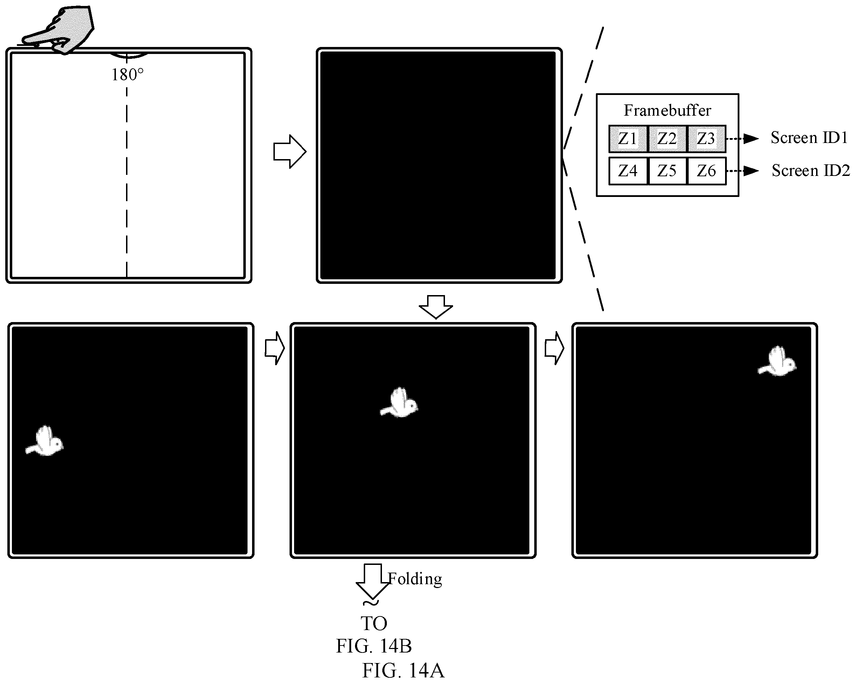

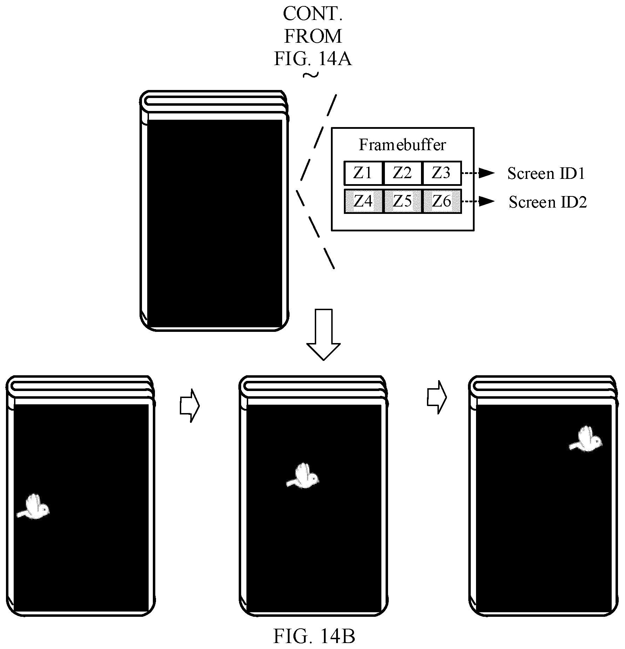

FIG. 14A and FIG. 14B are a schematic diagram of another example always-on display scenario according to an embodiment of this application;

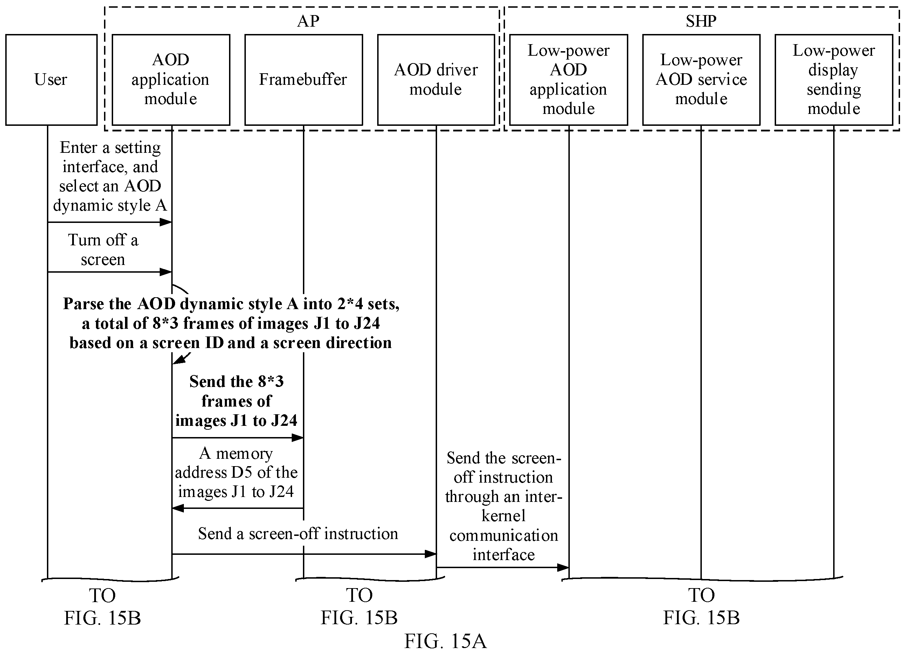

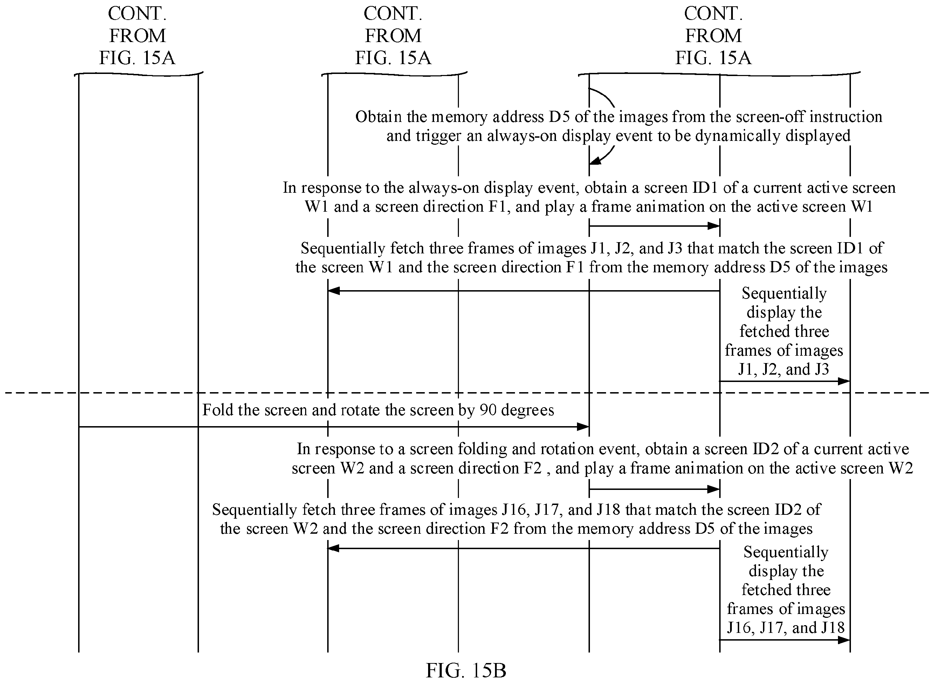

FIG. 15A and FIG. 15B are a schematic diagram of information exchange of other always-on display according to an embodiment of this application;

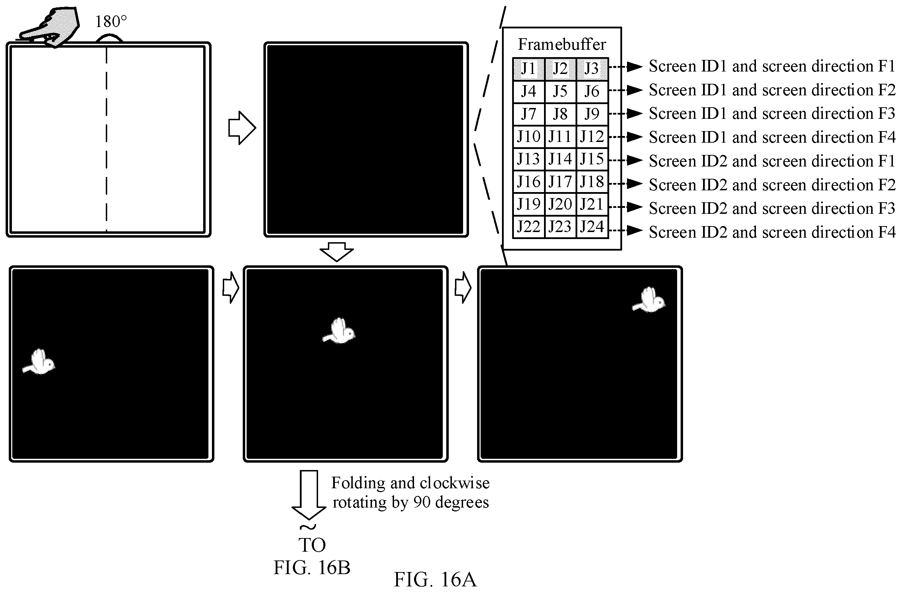

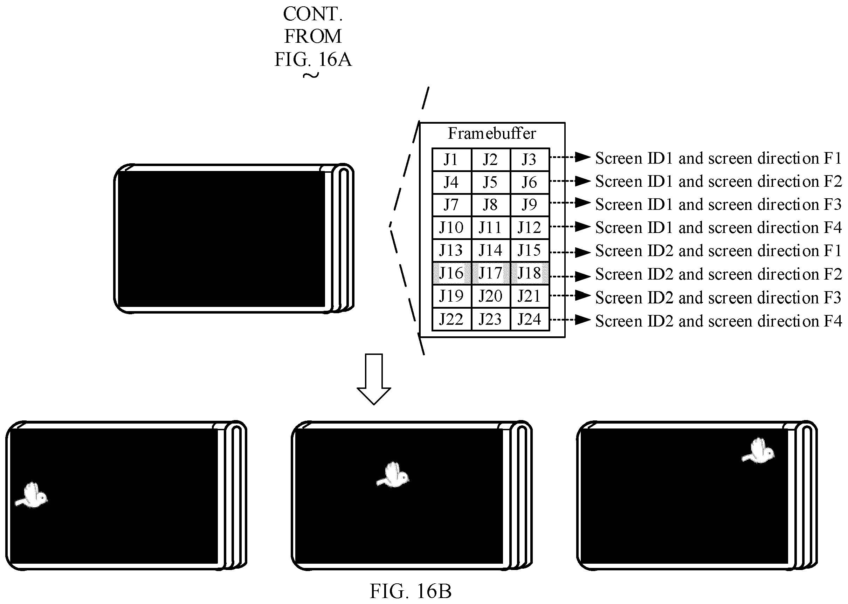

FIG. 16A and FIG. 16B are a schematic diagram of another example always-on display scenario according to an embodiment of this application;

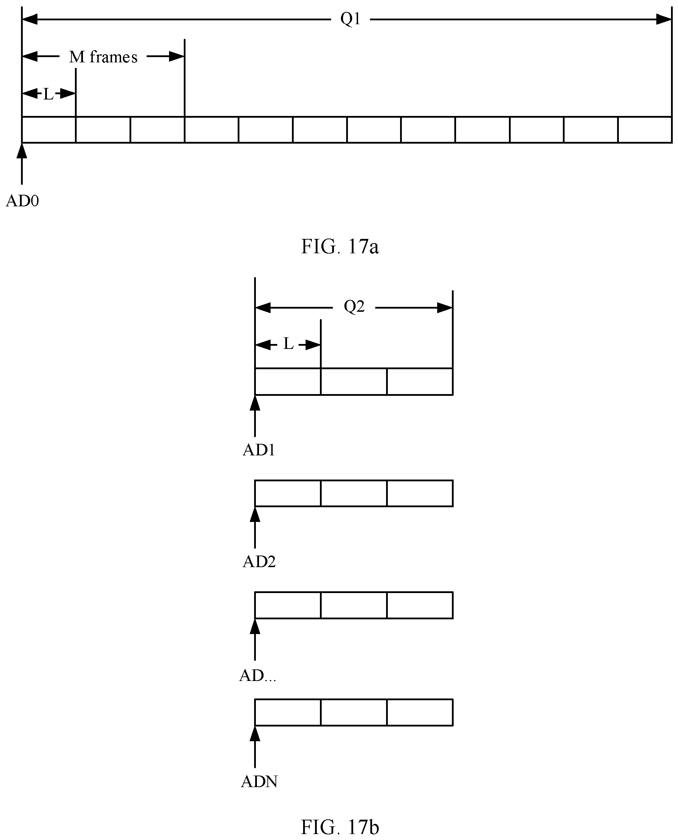

FIG. 17a is an example schematic diagram of a memory address of an always-on display resource according to an embodiment of this application;
FIG. 17b is an example schematic diagram of a memory address of another always-on display resource according to an embodiment of this application;

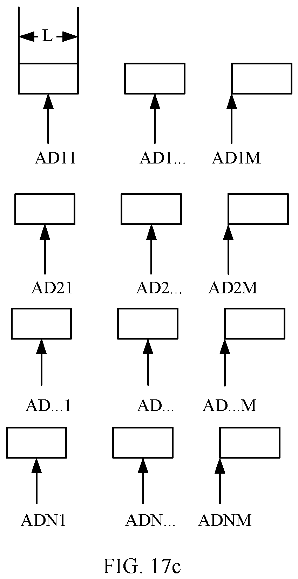

FIG. 17c is an example schematic diagram of a memory address of another always-on display resource according to an embodiment of this application;

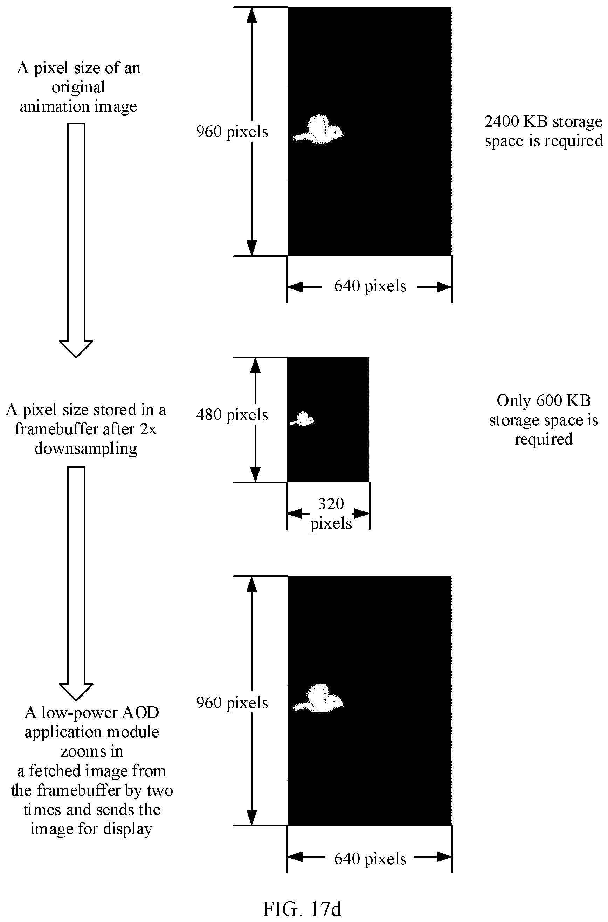

FIG. 17d is an example schematic diagram in which an image in an always-on display resource is downsampled, buffered, fetched, zoomed in, and then sent for display according to an embodiment of this application;

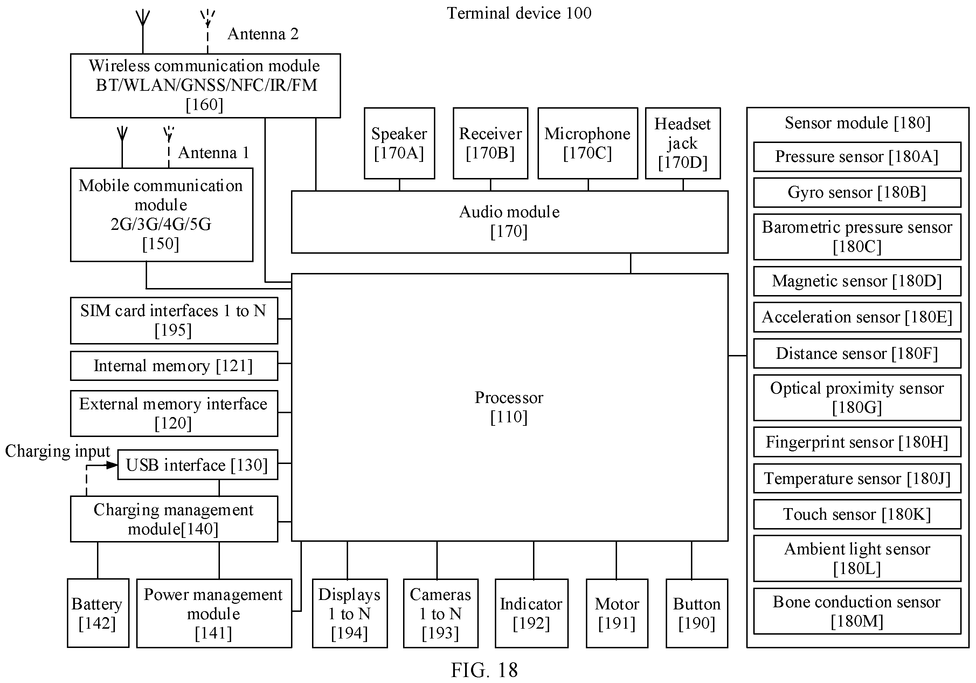

FIG. 18 is a schematic diagram of a structure of an example terminal device 100 according to an embodiment of this application;

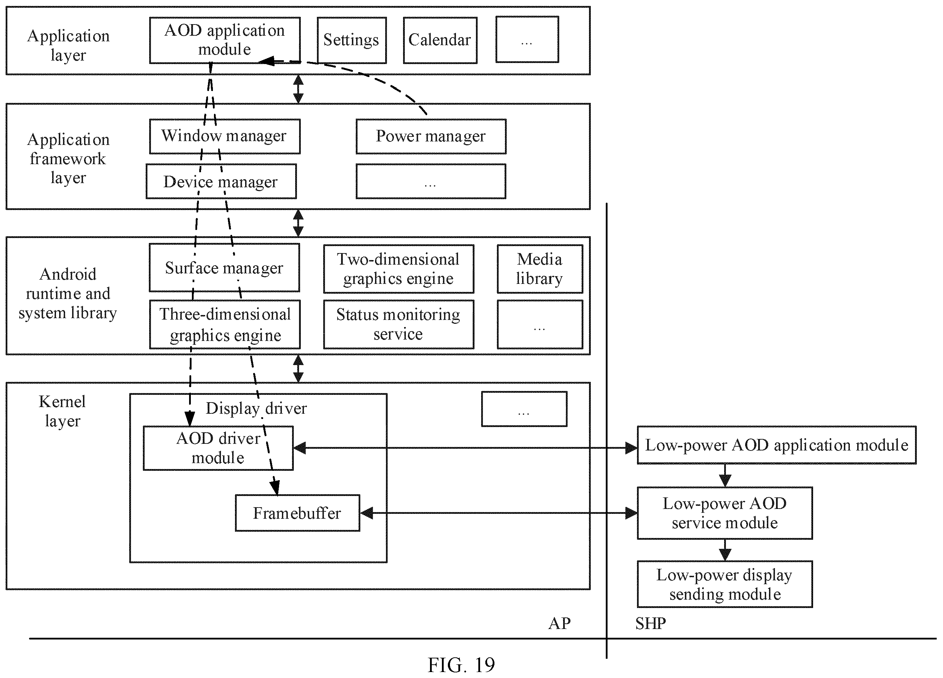

FIG. 19 is a block diagram of a software structure of an example terminal device 100 according to an embodiment of this application;

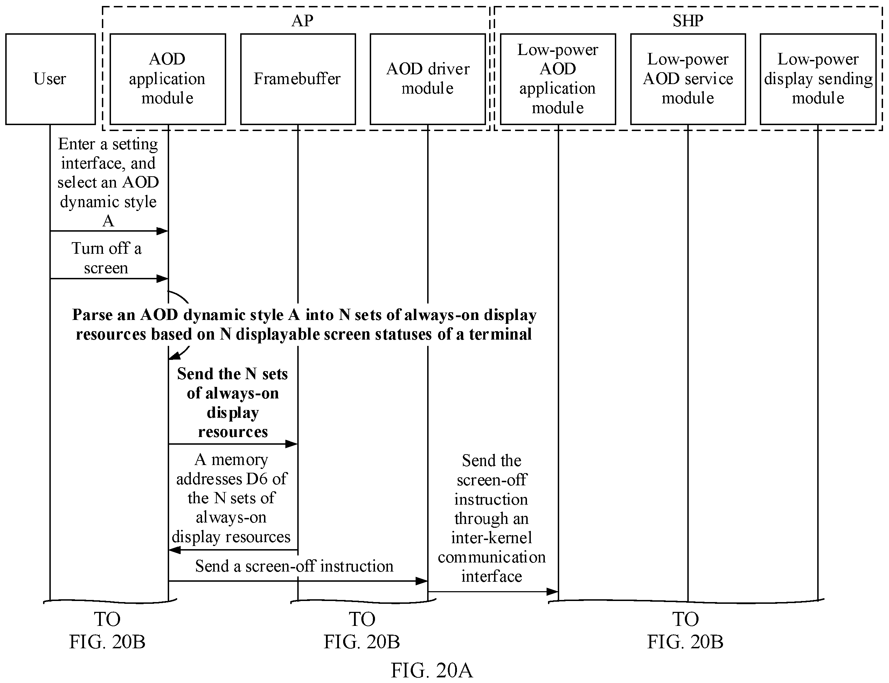

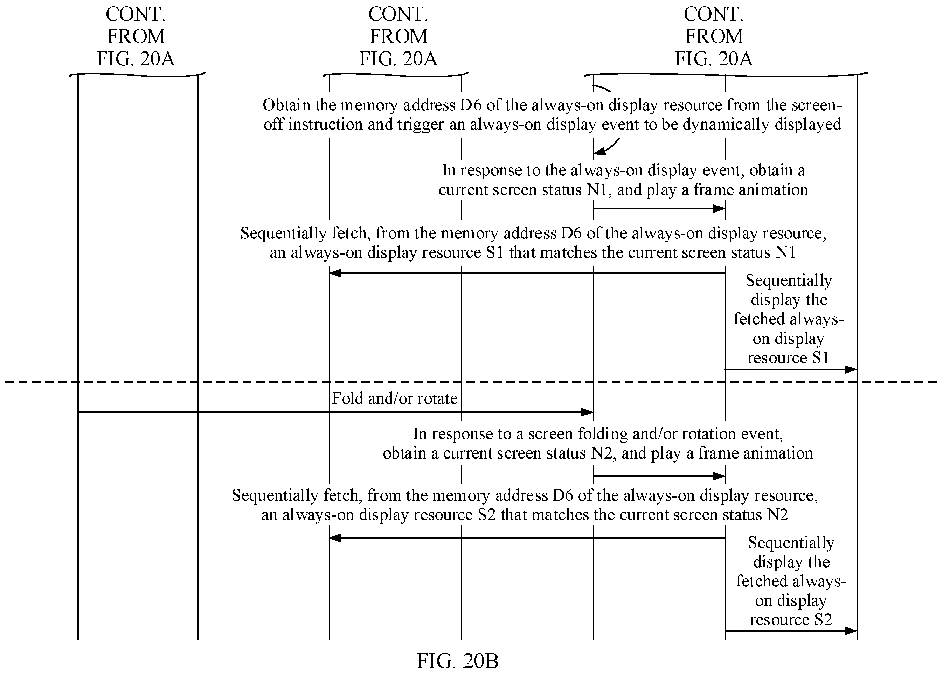

FIG. 20A and FIG. 20B are a schematic diagram of information exchange of other always-on display according to an embodiment of this application;

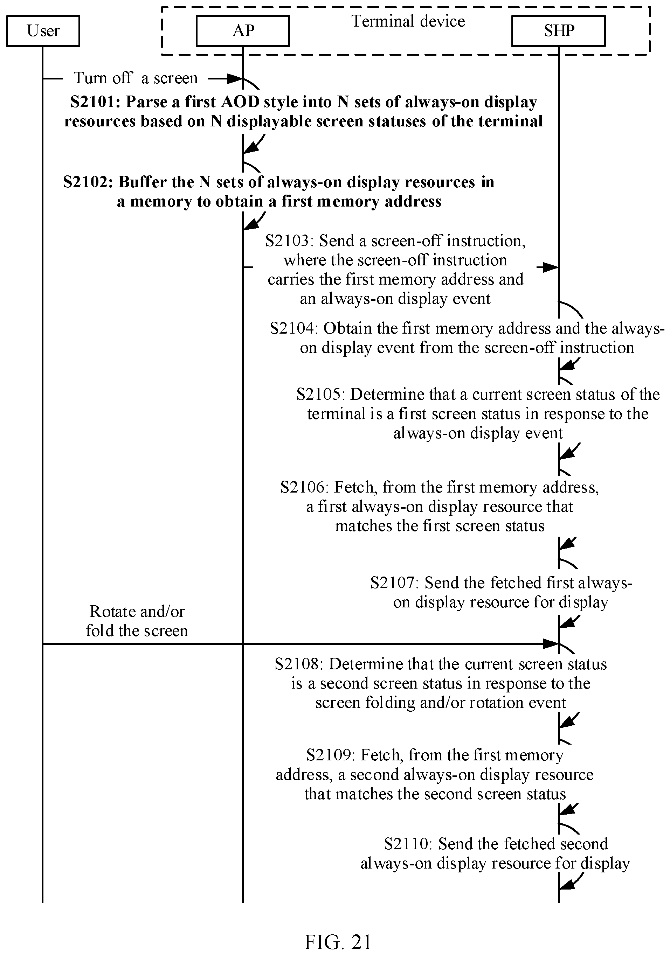

FIG. 21 is a schematic flowchart of an always-on display method according to an embodiment of this application;

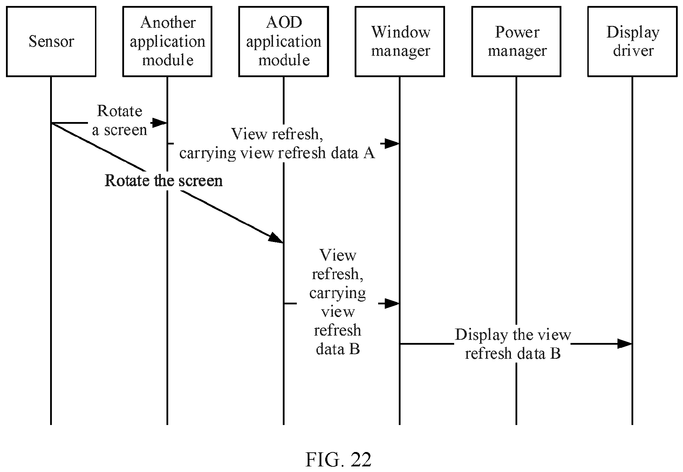

FIG. 22 is a schematic diagram of example exchange of view refresh according to an embodiment of this application;

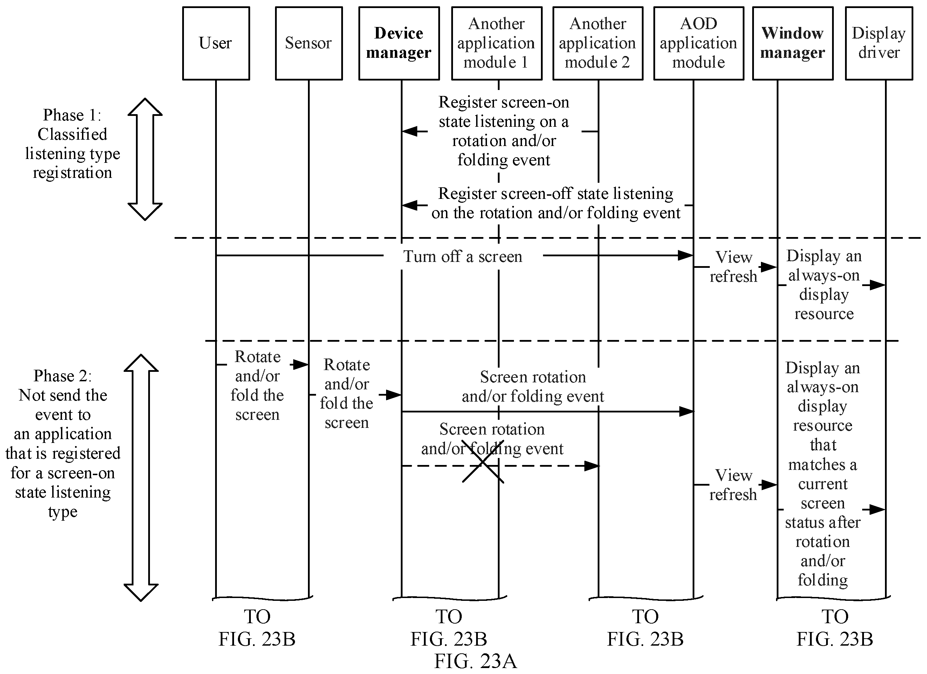

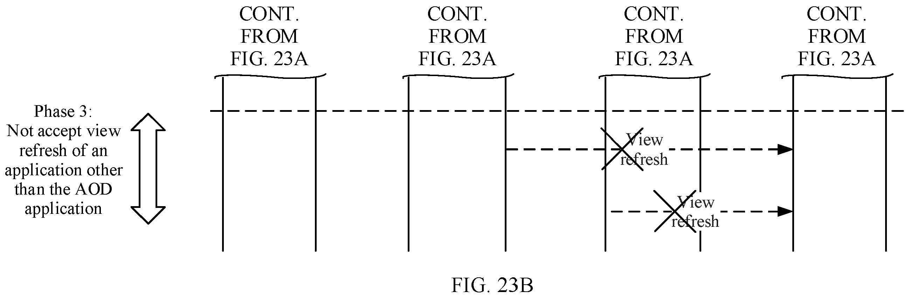

FIG. 23A and FIG. 23B are a schematic diagram of example exchange of other view refresh according to an embodiment of this application; and

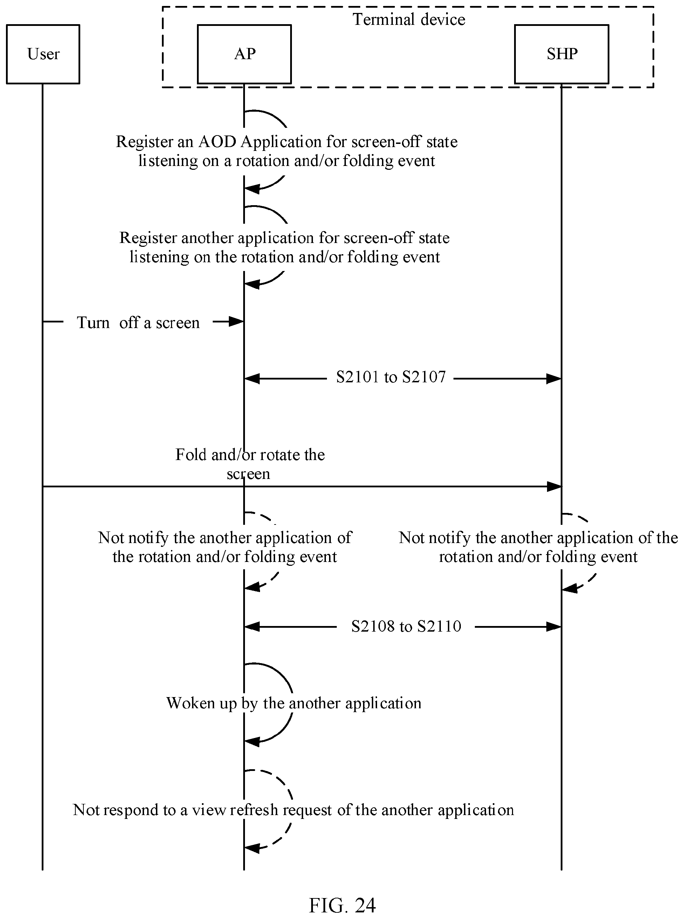

FIG. 24 is a schematic diagram of example exchange of other view refresh according to an embodiment of this application.

### DESCRIPTION OF EMBODIMENTS

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that the term "and/or" as used in this application refers to and includes any or all possible combinations of one or more of the listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Because embodiments of this application relate to an application of always-on display, for ease of understanding, the following first describes related terms and concepts in embodiments of this application.

### (1) Always-on display:

The always-on display is a display function of a terminal device. When an always-on display function of the terminal device is enabled, after a screen of the terminal device is locked or off, a preset always-on display resource can be displayed on the screen of the terminal device.

For example, information such as time, a date, and a battery level may be displayed on the screen of the terminal device after the terminal device is screen-off. For another example, an animation or the like may be displayed on the screen of the terminal device after the terminal device is screen-off.

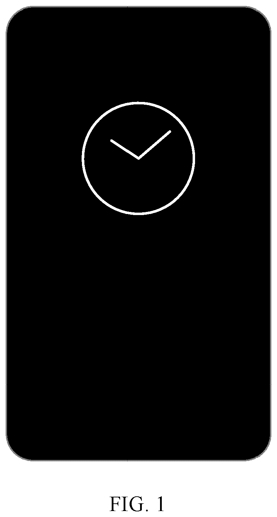

For example, FIG. 1 is an example schematic diagram of displaying a clock through always-on display by a terminal device. In this case, a screen of the terminal device is off, but a clock is displayed on the screen that is off. The clock may be dynamically updated with time to display current time.

A principle of the always-on display performed by the terminal device is developed based on a feature of an organic light-emitting diode (organic light-emitting diode, OLED) screen: each pixel of the OLED screen can emit light. If the OLED screen needs to display black, only corresponding pixels do not emit light; and if a pattern needs to be displayed on the OLED screen, only corresponding pixels need to be lit.

Therefore, the always-on display can be implemented by only lighting pixels corresponding to a pattern that needs to be displayed on the OLED screen, and keeping remaining pixels not working. For example, time can be displayed through the always-on display by only lighting corresponding pixels on the OLED screen to form a text or a number, and keeping remaining pixels on the OLED screen not working.

### (2) Displayable screen status and current screen status of the terminal:

### 2.1. Displayable screen status of the terminal:

The displayable screen status of the terminal is a screen status that can be used by the terminal to display a picture.

Based on different settings in the terminal, different quantities and structures of screens, one terminal may have a plurality of displayable screen statuses.

The following uses three terminal devices with different quantities and structures of the screens as examples to describe the displayable screen statuses of the terminal.

### <1> Single-screen tablet terminal:

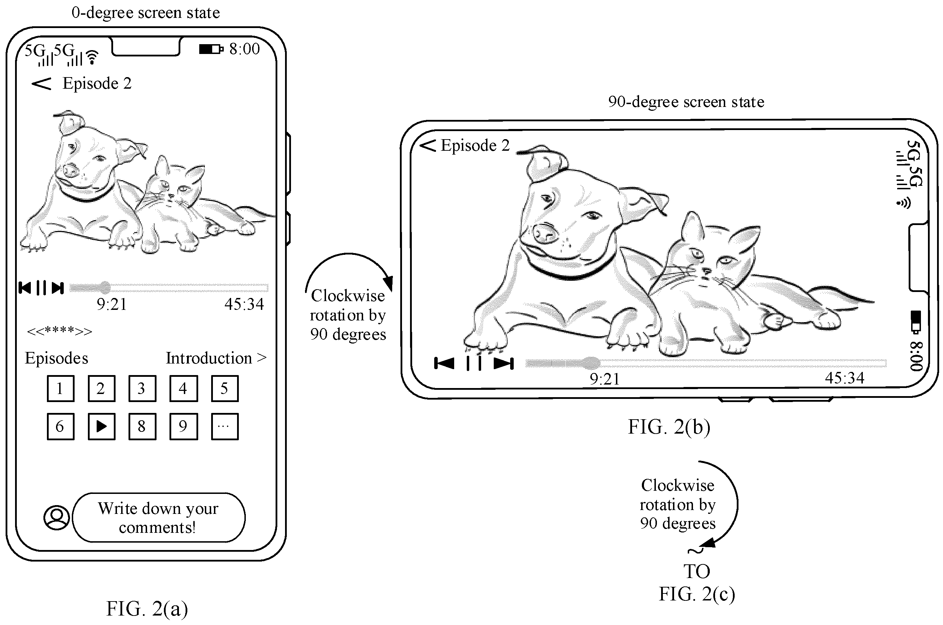

When a terminal setting does not limit the displayable screen statuses of the single-screen tablet terminal, as shown in FIG. 2(a) to FIG. 2(d), the single-screen tablet terminal may have four different displayable screen statuses: a 0-degree screen state, a 90-degree screen state, a 180-degree screen state, and a 270-degree screen state.

As shown in FIG. 2(a), in this application, such a displayable screen status of a forward portrait screen of the terminal is referred to as the 0-degree screen state.

As shown in FIG. 2(b), in this application, a displayable screen status after the terminal device is clockwise rotated by 90 degrees from the 0-degree screen state is referred to as the 90-degree screen state.

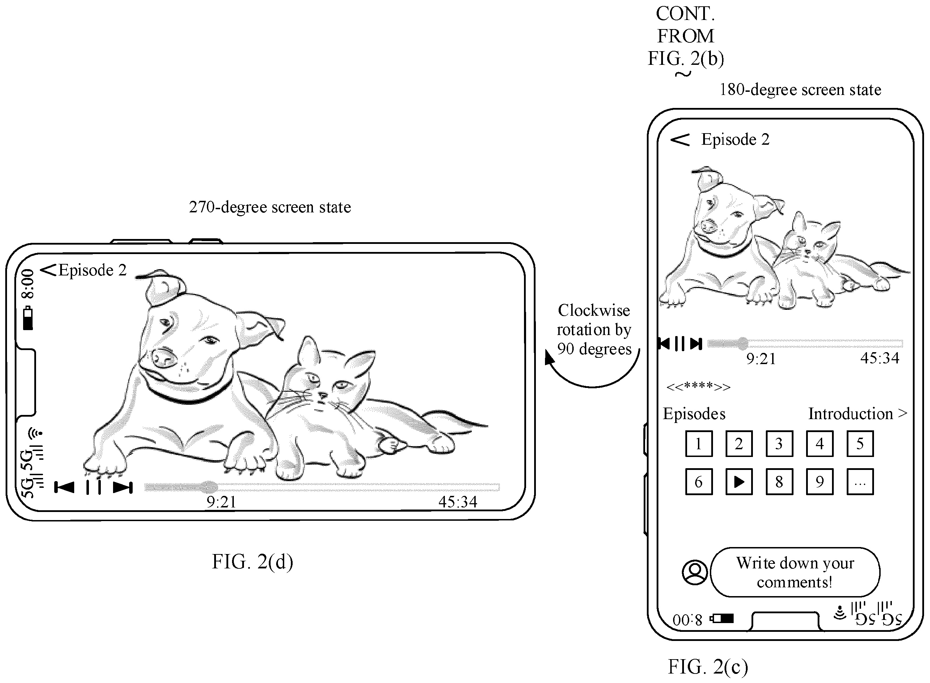

As shown in FIG. 2(c), in this application, a displayable screen status after the terminal device is clockwise rotated by 90 degrees from the 90-degree screen state is referred to as the 180-degree screen state.

As shown in FIG. 2(d), in this application, a displayable screen status after the terminal device is clockwise rotated by 90 degrees from the 180-degree screen state is referred to as the 270-degree screen state.

### <2> Dual-screen inward foldable terminal

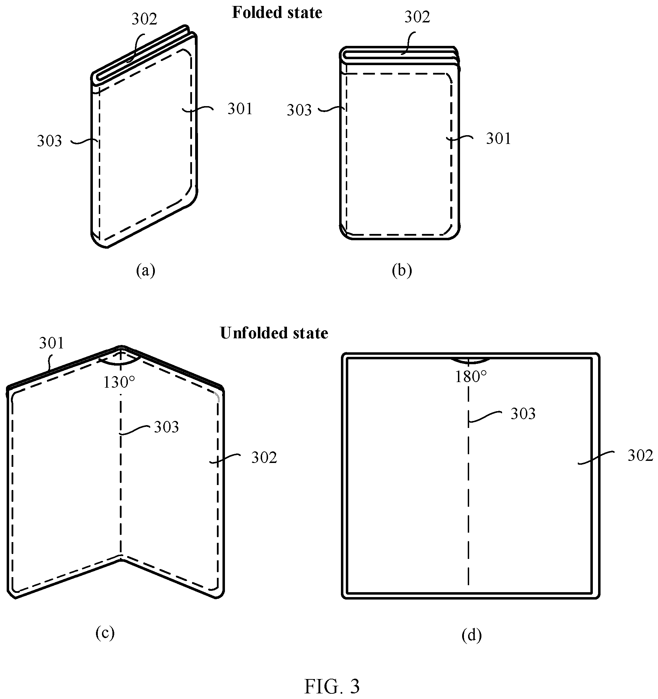

FIG. 3 is an example schematic diagram of folding and unfolding a dual-screen inward foldable terminal. The terminal includes two screens: a large screen 302 that can be folded inward and an external small screen 301.

As shown in (a) and (b) in FIG. 3, the terminal is folded inward based on an inner folding line 303 in the large screen 302, and is in a folded state. In this case, the terminal may display content by using the external small screen 301. It is assumed that an identifier ID of the small screen 301 in the terminal is PX. Therefore, according to different settings in the terminal, in the folded state of the terminal, there may also be a plurality of different displayable screen statuses: at least one of a PX-0-degree screen state, a PX-90-degree screen state, a PX-180-degree screen state, and a PX-270-degree screen state.

For example, in a case where the displayable screen status is not limited in the setting of the terminal, in the folded state of the terminal, there are four displayable screen statuses: the PX-0-degree screen state, the PX-90-degree screen state, the PX-180-degree screen state, and the PX-270-degree screen state.

For another example, in some embodiments, if setting is performed in the terminal to limit the displayable screen status of the terminal, the displayable screen status of the terminal in the folded state may include only the PX-0-degree screen state, or include only the PX-0-degree screen state, the PX-90-degree screen state, or the like. This is not limited herein.

It may be understood that limiting the displayable screen status of the terminal does not mean that the screen of the terminal cannot be displayed when the screen is in a limited displayable screen state. Although in some embodiments, the screen may not be displayed when the screen is in the limited displayable screen state, in more other embodiments, when the screen is in the limited displayable screen state, a display resource corresponding to an unlimited displayable screen state may be reused for display. For example, if the displayable screen status of the terminal in the folded state includes only the PX-0-degree screen state, when the terminal is in the folded state, regardless of which angle the terminal is rotated to, the screen is displayed in the PX-0-degree screen state. For another example, if the displayable screen statuses of the terminal in the folded state include only the PX-0-degree screen state and the PX-90-degree screen state, the screen may be displayed in the PX-0-degree screen state when the terminal is rotated to 0 degrees and 180 degrees, and in the PX-90-degree screen state when the terminal is rotated to 90 degrees and 270 degrees. In a case in which the displayable screen status of the terminal is limited, there may be a plurality of other screen status reuse display modes. This is not limited herein.

As shown in (c) and (d) in FIG. 3, the terminal is unfolded based on the inner folding line 303 in the large screen 302, and is in an unfolded state. In this case, the terminal may display content by using the large screen 302. It is assumed that an identifier ID of the large screen 302 in the terminal is PD. Therefore, according to different settings in the terminal, in the unfolded state of the terminal, there may also be a plurality of different displayable screen statuses: at least one of a PD-0-degree screen state, a PD-90-degree screen state, a PD-180-degree screen state, and a PD-270-degree screen state. This is not limited herein.

Therefore, in some embodiments, if the dual-screen inward foldable terminal may display the picture by using two screens with different IDs in the folded state and the unfolded state, and the displayable screen status is not limited in the setting of the terminal, the dual-screen inward foldable terminal may have eight different displayable screen statuses: the PX-0-degree screen state, the PX-90-degree screen state, the PX-180-degree screen state, the PX-270-degree screen state, the PD-0-degree screen state, the PD-90-degree screen state, the PD-180-degree screen state, and the PD-270-degree screen state.

### <3> Dual-screen outward foldable terminal

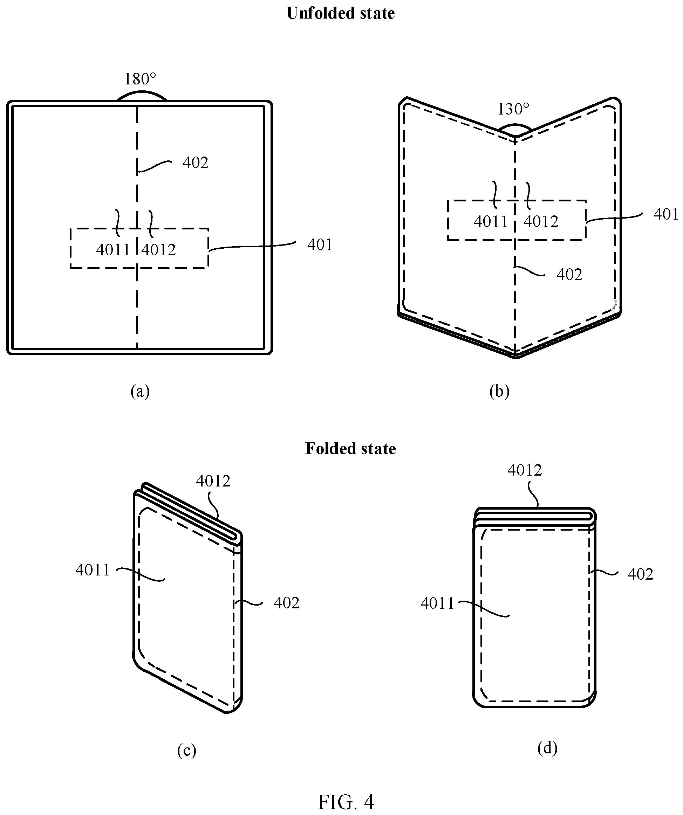

FIG. 4 is an example schematic diagram of folding and unfolding a dual-screen outward foldable terminal. The terminal includes two screens: a screen 4011 located on the left and a screen 4012 located on the right. The two screens may further form a large screen 401. The large screen 401 may be used as a whole to display the picture. After the large screen 401 is folded out based on an outer folding line 402, the screen 4011 and the screen 4012 may separately display the picture.

As shown in (a) in FIG. 4, in the unfolded state, the screen 4011 and the screen 4012 are used as the whole large screen 401 to display the picture. It is assumed that an identifier ID of the large screen 401 in the terminal is PZ0. Therefore, according to different settings in the terminal, in the unfolded state of the terminal, there may also be a plurality of different displayable screen statuses: at least one of a PZ0-0-degree screen state, a PZ0-90-degree screen state, a PZ0-180-degree screen state, and a PZ0-270-degree screen state. This is not limited herein.

As shown in (b) in FIG. 4, the dual screens may be folded outward, and a folded state after being folded outward may be shown in (c) and (d) in FIG. 4. In the folded state, according to different user settings, the screen 4011 may be used to display the picture, or the screen 4012 may be used to display the picture.

It is assumed that an identifier ID of the screen 4011 in the terminal is PZ1. Therefore, according to different settings in the terminal, in the unfolded state of the terminal, when the screen 4011 is used to display the picture, there may also be a plurality of different displayable screen statuses: at least one of a PZ1-0-degree screen state, a PZ1-90-degree screen state, a PZ1-180-degree screen state, and a PZ1-270-degree screen state. This is not limited herein.

It is assumed that an identifier ID of the screen 4012 in the terminal is PZ2. Therefore, according to different settings in the terminal, in the unfolded state of the terminal, when the screen 4012 is used to display the picture, there may also be a plurality of different displayable screen statuses: at least one of a PZ2-0-degree screen state, a PZ2-90-degree screen state, a PZ2-180-degree screen state, and a PZ2-270-degree screen state. This is not limited herein.

Therefore, in some embodiments, if the dual-screen outward foldable terminal may display the picture by using three screens with different IDs in the folded state and the unfolded state, and the displayable screen status is not limited in the setting of the terminal, the dual-screen outward foldable terminal may have 12 different displayable screen statuses: the PZ0-0-degree screen state, the PZ0-90-degree screen state, the PZ0-180-degree screen state, the PZ0-270-degree screen state, the PZ1-0-degree screen state, the PZ1-90-degree screen state, the PZ1-180-degree screen state, the PZ1-270-degree screen state, the PZ2-0-degree screen state, the PZ2-90-degree screen state, the PZ2-180-degree screen state, and the PZ2-270-degree screen state.

It may be understood that there may be a terminal having more screens and including more displayable screen statuses. This is not limited herein.

### 2.2. Current screen status of the terminal:

One terminal may have a plurality of displayable screen statuses. In this application, a screen status currently used by the terminal to display a picture is referred to as a current screen status of the terminal.

For example, one single-screen tablet terminal may have four displayable screen statuses. If the screen status currently used by the terminal to display the picture is shown in FIG. 2(a), it may be determined that the current screen status of the terminal is a 0-degree screen state. If the screen status currently used by the terminal to display the picture is shown in FIG. 2(c), it may be determined that the current screen status of the terminal is the 180-degree screen state.

For another example, one dual-screen inward foldable terminal shown in FIG. 3 may have eight displayable screen statuses. If the terminal currently uses the small screen 301 to display the picture in the folded state, and the small screen 301 is clockwise rotated by 90 degrees in the 0-degree screen display state to display the picture in a landscape display mode, it may be determined that the current screen status of the terminal is the PD-90-degree screen state.

### (3) Always-on display resource:

The always-on display resource is an image resource used by the terminal device during always-on display.

One terminal has different displayable screen statuses. When the terminal performs always-on display, the current screen status of the terminal may be switched due to rotation and/or folding, and the switching may also cause a change of a screen origin or a change of a screen size.

If an always-on display resource matching the current screen status of the terminal is not obtained through update after the current screen status of the terminal is switched, a display effect may not meet user expectation.

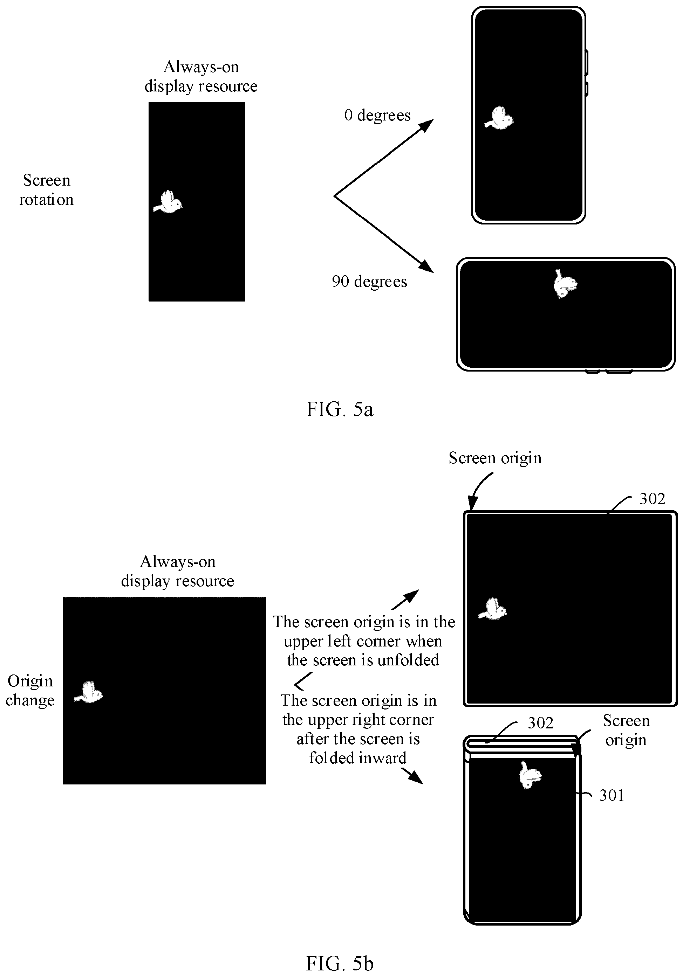

FIG. 5a is an example schematic diagram in which a display effect is poor because an always-on display resource is not updated after a screen is rotated. A bird in the always-on display resource should fly from left to right. However, after the screen is rotated by 90 degrees, the current screen status of the terminal is switched from the 0-degree screen state to the 90-degree screen state. If the always-on display resource is still used for display, the bird in a displayed picture flies from top to bottom. As a result, a display effect is different from an effect to be achieved by the always-on display resource.

FIG. 5b is an example schematic diagram in which a display effect is poor because a screen origin changes after a screen is folded inward. The bird in the always-on display resource needs to fly from left to right. When the screen is in the unfolded state, a screen origin on the large screen 302 is in the upper left corner. After the screen is folded inward, a screen origin on the small screen 301 of the displayed picture is in the upper right corner. If the always-on display resource is still used for display, the bird in the displayed picture flies from top to bottom. As a result, a display effect is different from an effect to be achieved by the always-on display resource.

In addition, if a screen width changes, for example, when the screen width is halved because the screen is folded outward, because an always-on display resource width does not match the screen, a snowflake-like artifact may occur, which also leads to a poor display effect.

Therefore, after the current screen status of the terminal is switched, an always-on display resource matching the current screen status of the terminal needs to be used.

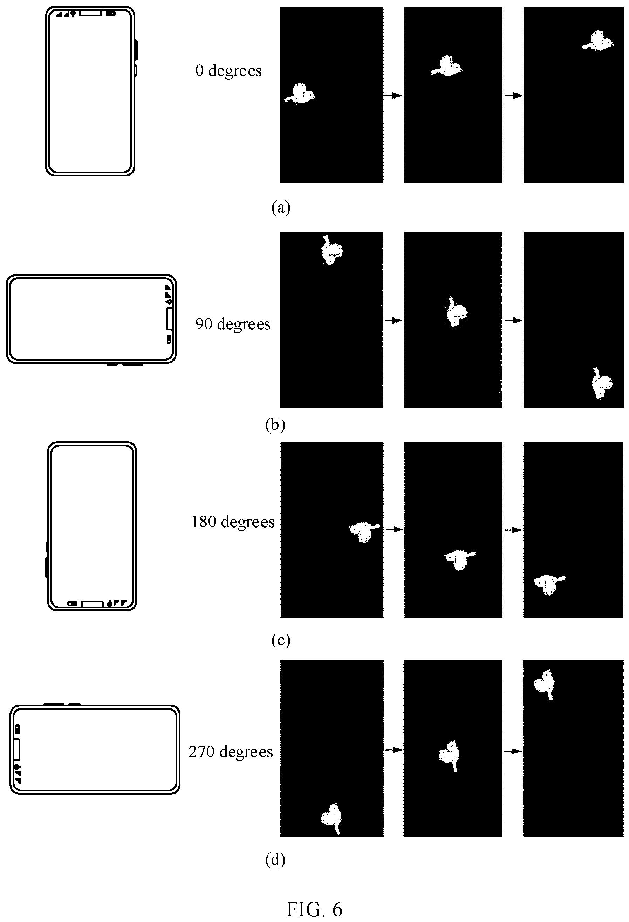

For example, the four displayable screen statuses of the single-screen tablet terminal are used as an example. (a) in FIG. 6 shows a corresponding always-on display resource when the current screen status of the terminal is the 0-degree screen state. (b) in FIG. 6 shows a corresponding always-on display resource when the current screen status of the terminal is the 90-degree screen state. (c) in FIG. 6 shows a corresponding always-on display resource when the current screen status of the terminal is the 180-degree screen state. (d) in FIG. 6 shows a corresponding always-on display resource when the current screen status of the terminal is the 270-degree screen state.

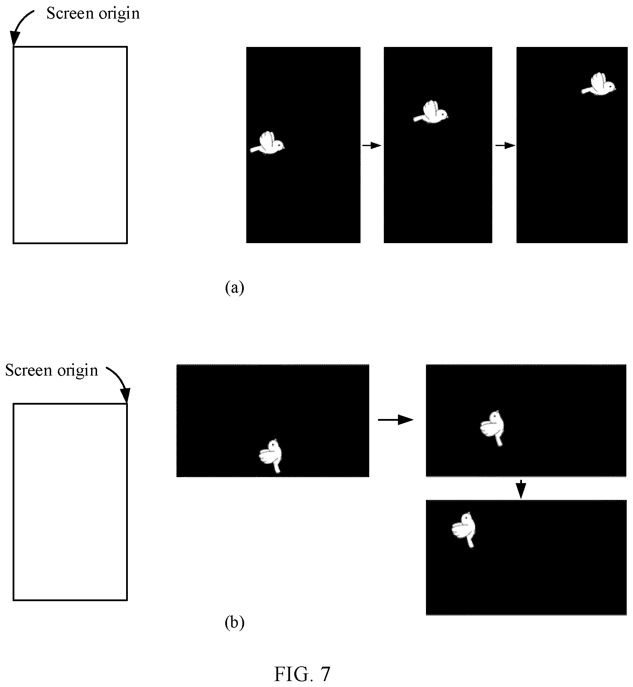

For example, (a) in FIG. 7 shows a corresponding always-on display resource when the screen origin of a display of the current displayed picture of the terminal is in the upper left corner. (b) in FIG. 7 shows a corresponding always-on display resource when the screen origin of the display of the current displayed picture of the terminal is in the upper right corner.

For different current screen statuses, different always-on display resources that match the current screen statuses may be used, so that a display effect of a final picture is consistent with an effect to be achieved by the always-on display resource.

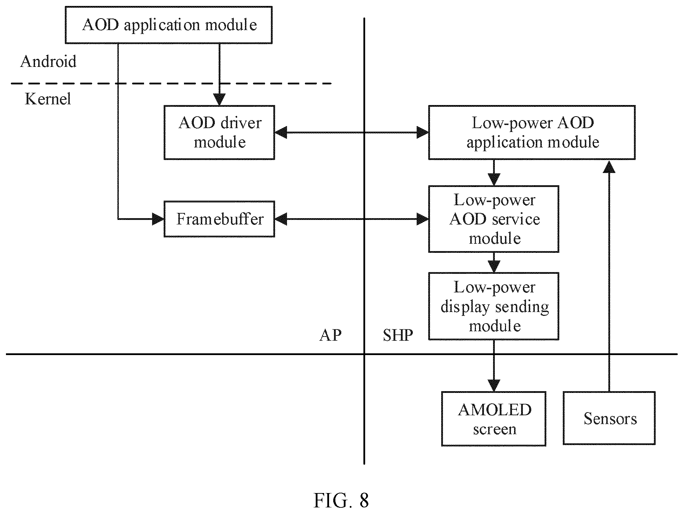

FIG. 8 is a schematic diagram of a software architecture of a terminal device. The terminal device includes an application processor (application processor, AP) and an intelligent sensor hub (sensor hub processor, SHP). An Android (Android) application layer of the AP includes an AOD application module, and a kernel layer of the AP includes an AOD driver module and a framebuffer (framebuffer). The SHP includes a low-power AOD application module, a low-power AOD service module, and a low-power display sending module. The terminal device may further include an AMOLED screen and various sensors.

The framebuffer is a screen picture buffer. In some systems, applications cannot directly access a physical buffer address. The physical address of the screen picture buffer can be mapped to a virtual address in user space through a mapping operation. Then, the virtual address can be read and written to access the screen picture buffer and draw on the screen.

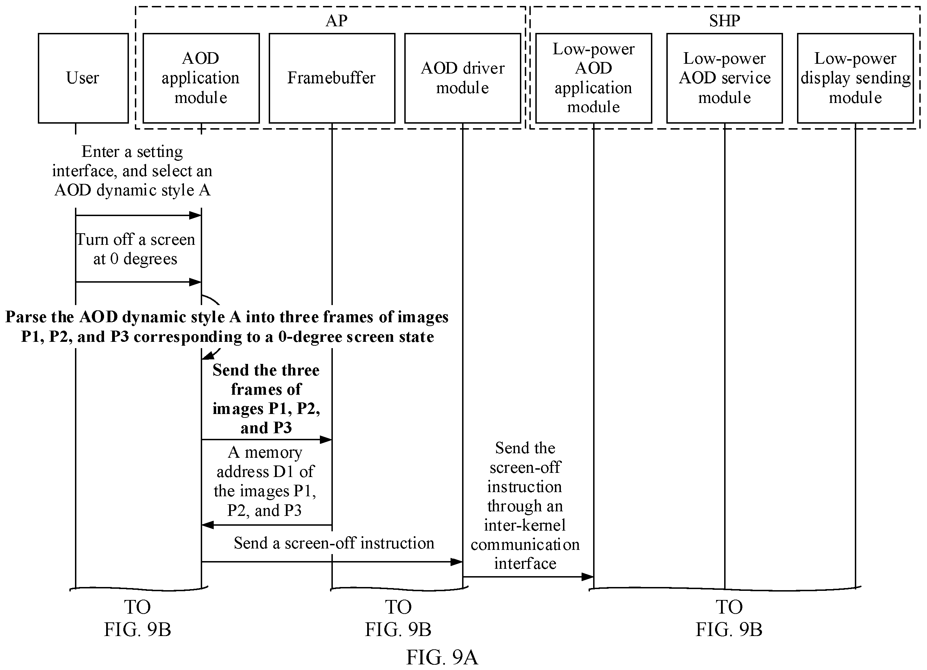

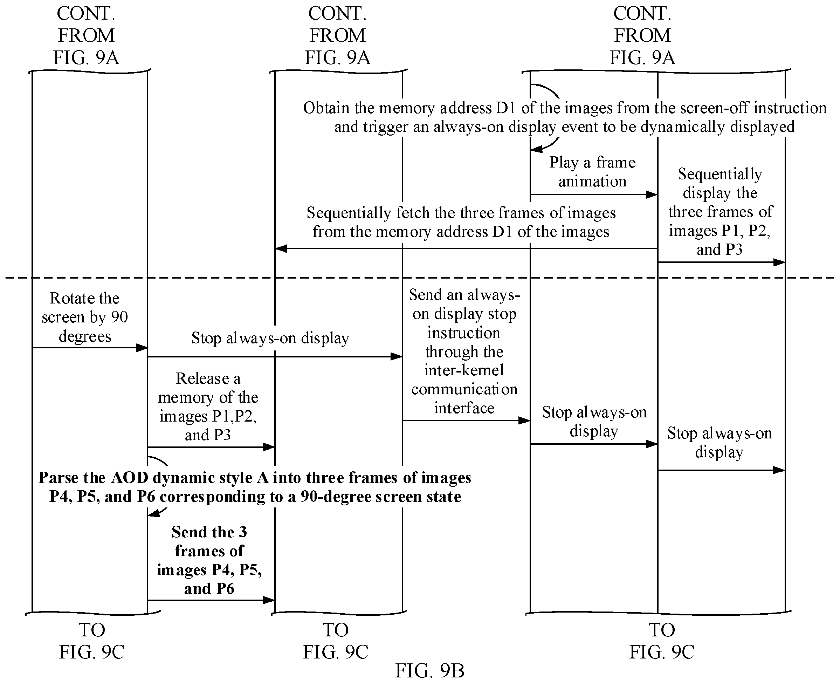

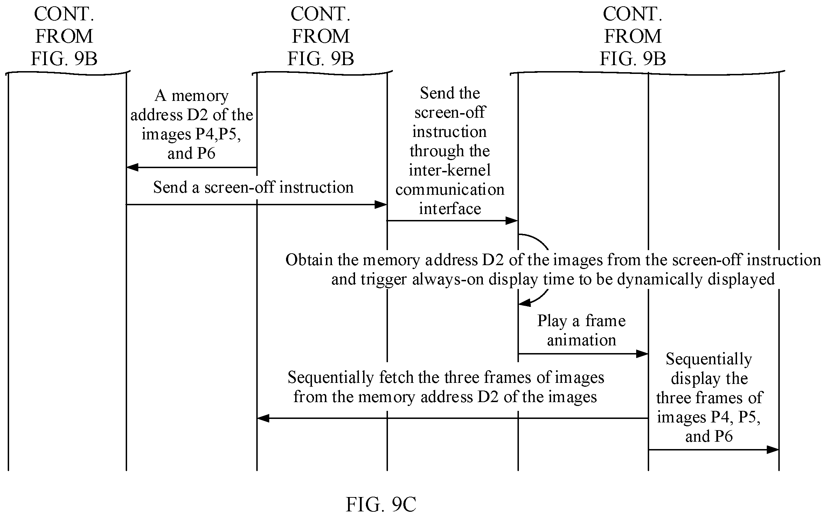

An always-on display mode is described with reference to the schematic diagram of the software architecture of the terminal device shown in FIG. 8, an information exchange diagram shown in FIG. 9A to FIG. 9C, and schematic diagrams of example always-on display scenarios shown in FIG. 10a-1, FIG. 10a-2, and FIG. 10b-1 to FIG. 10b-3.

A user accesses an always-on display setting interface of the terminal device, and selects an AOD dynamic style A, that is, sets the AOD dynamic style A to be displayed through always-on display. It is assumed that the AOD dynamic style A is to dynamically display three images.

As shown in FIG. 10a-1 and FIG. 10a-2, when the user turns off the screen of the terminal device when the terminal device is in the 0-degree screen state, in response to the operation, the AOD application module parses the AOD dynamic style A into three frames of images P1, P2, and P3 corresponding to the current screen status (the 0-degree screen state), and sends the three frames of images to the framebuffer.

The framebuffer stores the three frames of images P1, P2, and P3, and returns a memory address D1 for reading the three images to the AOD application module.

The AOD application module transmits a screen-off instruction carrying the memory address D1 to the low-power AOD application module in the SHP through the AOD driver module. After obtaining always-on display time and the memory address D1 of the images from the screen-off instruction, the low-power AOD application module may trigger the low-power AOD service module to play a frame animation.

The AOD service module sequentially fetches the three frames of images P1, P2, and P3 from a storage area to which the memory address D1 of the images points, and sends the three frames of images to the low-power display sending module for displaying the three frames of images in sequence.

As shown in FIG. 10b-1 to FIG. 10b-3, when the user clockwise rotates the screen of the terminal device by 90 degrees to change the screen status of the terminal device from the 0-degree screen state to the 90-degree screen state, the AP is triggered to wake up, and then the AOD application module running on the AP sends, in response to the operation, an always-on display stop instruction to the low-power AOD application module through the AOD driver module, so that the always-on display stops and a memory of the images P1, P2, and P3 is released.

Then, the AOD application module parses the AOD dynamic style A into three frames of images P4, P5, and P6 corresponding to the current screen status (the 90-degree screen state), and sends the three frames of images to the framebuffer.

The framebuffer stores the three frames of images P4, P5, and P6, and returns a memory address D2 for reading the three images to the AOD application module.

The AOD application module transmits a screen-off instruction carrying the memory address D2 to the low-power AOD application module in the SHP through the AOD driver module. After obtaining an always-on display event and the memory address D2 of the images from the screen-off instruction, the low-power AOD application module may trigger the low-power AOD service module to play a frame animation.

The low-power AOD service module sequentially fetches the three frames of images P4, P5, and P6 from a storage area to which the memory address D2 of the images points, and sends the three frames of images to the low-power display sending module for displaying the three frames of images in sequence.

In this always-on display mode, when the current screen status of the terminal device changes (for example, the screen of the terminal device is rotated or folded), the AOD application module running on the AP needs to be woken up. The AOD application module parses an AOD dynamic style into an always-on display resource matching the current screen status, and then sends the resource to the low-power AOD application module for display. In this way, in an always-on display process, the AP needs to be woken up to parse and process the always-on display resource. As a result, power consumption of the terminal device is high during screen off. In addition, waking up the AP may cause another application module that depends on the AP to be woken up, thereby further increasing power consumption during screen off.

According to the always-on display method provided in embodiments of this application, always-on display resources corresponding to various displayable screen statues of the terminal can be generated and buffered when the terminal is screen-off. In the always-on display process of the terminal, if the current screen status of the terminal device changes, the SHP needs to only determine a corresponding always-on display resource from the buffer for display. The AP does not need to be woken up to re-parse the always-on display resource. Therefore, power consumption of the terminal device during the always-on display can be greatly reduced.

The following separately describes the always-on display method in embodiments of this application by using three terminal devices that have different displayable screen statuses as examples with reference to specific application scenarios.

Example scenario 1: The single-screen tablet terminal shown in FIG. 2(a) to FIG. 2(d) is clockwise rotated by 90 degrees in an always-on display process.

The following describes the example scenario 1 with reference to the information exchange diagram shown in FIG. 11A and FIG. 11B and the schematic diagram of an example always-on display scenario shown in FIG. 12A to FIG. 12C.

The user accesses the always-on display setting interface of the terminal device, and selects the AOD dynamic style A, that is, sets the AOD dynamic style A to be displayed through always-on display. It is assumed that the AOD dynamic style A is to dynamically display three images.

As shown in FIG. 12A to FIG. 12C, when the user turns off the screen of the terminal device when the terminal device is in the 0-degree screen state, the AOD application module may, parse, in response to the operation, the AOD dynamic style A into always-on display resources corresponding to all displayable screen statuses of the terminal device. As shown in FIG. 2(a) to FIG. 2(d), when there is no limitation in a setting, the single-screen tablet terminal has four displayable screen statuses. Therefore, the AOD application module may parse the AOD dynamic style A into four sets of always-on display resources respectively corresponding to the four displayable screen statuses. The four sets of always-on display resources are as follows:
a set of always-on display resources P1, P2, and P3 corresponding to the 0-degree screen state;
a set of always-on display resources P4, P5, and P6 corresponding to the 90-degree screen state;
a set of always-on display resources P7, P8, and P9 corresponding to the 180-degree screen state; and
a set of always-on display resources P10, P11, and P12 corresponding to the 270-degree screen state.

Finally, the AOD dynamic style A is parsed into four sets of always-on display resources of a total of 4*3 frames of images P1 to P12.

The AOD application module sends the four sets of always-on display resources to the framebuffer.

The framebuffer stores the four sets of always-on display resources P1 to P12, and returns a memory address D3 for reading the four sets of always-on display resources to the AOD application module.

The AOD application module transmits a screen-off instruction carrying the memory address D3 to the low-power AOD application module in the SHP through the AOD driver module. After obtaining the always-on display event and the memory address D3 from the screen-off instruction, the low-power AOD application module may trigger the low-power AOD service module to play a frame animation.

The low-power AOD service module may sequentially fetch the always-on display resources P1, P2, and P3 that match the current screen status (the 0-degree screen state) of the terminal from a storage area to which the memory address D3 points, and sends the three frames of images P1, P2, and P3 to the low-power display sending module for displaying the three frames of images P1, P2, and P3 in sequence.

As shown in FIG. 12A to FIG. 12C, when the SHP detects that the user clockwise rotates the screen of the terminal device by 90 degrees to change the screen status of the terminal device from the 0-degree screen state to the 90-degree screen state, the low-power AOD application module in the SHP may directly trigger, in response to the operation, the low-power AOD service module to play the frame animation in the 90-degree screen state.

The low-power AOD service module sequentially fetches the always-on display resources P4, P5, and P6 that match the current screen status (the 90-degree screen state) of the terminal from a storage area to which the memory address D3 points, and sends the three frames of images P4, P5, and P6 to the low-power display sending module for displaying the three frames of images P4, P5, and P6 in sequence.

Example scenario 2: A screen of the dual-screen inward foldable terminal shown in FIG. 3 is folded inward in an always-on display process.

The following describes the example scenario 2 with reference to the information exchange diagram shown in FIG. 13A and FIG. 13B and the schematic diagram of an example always-on display scenario shown in FIG. 14A and FIG. 14B.

The user accesses the always-on display setting interface of the terminal device, and selects the AOD dynamic style A, that is, sets the AOD dynamic style A to be displayed through always-on display. It is assumed that the AOD dynamic style A is to dynamically display three images.

As shown in FIG. 14A and FIG. 14B, when the user turns off the screen of the dual-screen inward foldable terminal when the dual-screen inward foldable terminal is in the unfolded state, the AOD application module may parse, in response to the operation, the AOD dynamic style A into always-on display resources corresponding to all displayable screen statuses of the terminal device.

In the example scenario 2, it is assumed that the displayable screen status of the terminal is limited by setting the dual-screen inward foldable terminal, so that there are only two displayable screen statuses: In the unfolded state, a large screen W1 is used to display a picture in the 0-degree screen state, and after the terminal is folded inward, a small screen W2 is used to display the picture in the 0-degree screen state.

Therefore, the AOD application module may parse the AOD dynamic style A into two sets of always-on display resources respectively corresponding to the two displayable screen statuses. The two sets of always-on display resources are as follows:
a set of always-on display resources Z1, Z2, and Z3 corresponding to the large screen W1 (a screen ID1); and
a set of always-on display resources Z4, Z5, and Z6 corresponding to the small screen W2 (a screen ID2).

Finally, the AOD dynamic style A is parsed into two sets of always-on display resources of a total of 2*3 frames of images Z1 to Z6.

The AOD application module sends the two sets of always-on display resources to the framebuffer.

The framebuffer stores the two sets of always-on display resources Z1 to Z6, and returns a memory address D4 for reading the two sets of always-on display resources to the AOD application module.

The AOD application module transmits a screen-off instruction carrying the memory address D4 to the low-power AOD application module in the SHP through the AOD driver module. After obtaining the always-on display event and the memory address D4 from the screen-off instruction, in response to the always-on display event, the low-power AOD application module may obtain the screen ID1 of the current active screen W1, and trigger the low-power AOD service module to play a frame animation through the active screen W1.

The low-power AOD service module sequentially fetches the always-on display resources Z1, Z2, and Z3 that match the screen ID1 of the screen W1 from a storage area to which the memory address D4 points, and sends the three frames of images Z1, Z2, and Z3 to the low-power display sending module for displaying the three frames of images Z1, Z2, and Z3 in sequence.

As shown in FIG. 14A and FIG. 14B, when the SHP detects that the user folds the large screen of the terminal device inward to use the small screen W2 to display the picture, the low-power AOD application module in the SHP may directly trigger, in response to the operation, the low-power AOD service module to play the frame animation through the active screen W2.

The low-power AOD service module sequentially fetches the always-on display resources Z4, Z5, and Z6 that match the screen ID2 of the screen W2 from the storage area to which the memory address D4 points, and sends the three frames of images Z4, Z5, and Z6 to the low-power display sending module for displaying the three frames of images Z4, Z5, and Z6 in sequence.

Example scenario 3: The dual-screen outward foldable terminal shown in FIG. 4 is folded outward and clockwise rotated by 90 degrees in an always-on display process.

The following describes the example scenario 3 with reference to the information exchange diagram shown in FIG. 15A and FIG. 15B and the schematic diagram of an example always-on display scenario shown in FIG. 16A and FIG. 16B.

The user accesses the always-on display setting interface of the terminal device, and selects the AOD dynamic style A, that is, sets the AOD dynamic style A to be displayed through always-on display. It is assumed that the AOD dynamic style A is to dynamically display three images.

As shown in FIG. 16A and FIG. 16B, when the user turns off the screen of the dual-screen outward foldable terminal when the dual-screen outward foldable terminal is in the unfolded state, the AOD application module may parse, in response to the operation, the AOD dynamic style A into always-on display resources corresponding to all displayable screen statuses of the terminal device.

In the example scenario 3, it is assumed that the displayable screen status of the terminal is limited by setting the dual-screen outward foldable terminal, so that there are only eight displayable screen statuses: In the unfolded state, the large screen W1 is used to display the picture in four screen directions, and after the terminal is folded outward, the small screen W2 is used to display the picture in the four screen directions.

Therefore, the AOD application module may parse the AOD dynamic style A into eight sets of always-on display resources respectively corresponding to the eight displayable screen statuses. The eight sets of always-on display resources are as follows:
a set of always-on display resources J1, J2, and J3 corresponding to the large screen W1 (the screen ID1) in a screen direction F1 (0 degrees);
a set of always-on display resources J4, J5, and J6 corresponding to the large screen W1 in a screen direction F2 (90 degrees);
a set of always-on display resources J7, J8, and J9 corresponding to the large screen W1 in a screen direction F3 (180 degrees);
a set of always-on display resources J10, J11, and J12 corresponding to the large screen W1 in a screen direction F4 (270 degrees);
a set of always-on display resources J13, J14, and J15 corresponding to the small screen W2 (the screen ID2) in the screen direction F1 (0 degrees);
a set of always-on display resources J16, J17, and J18 corresponding to the small screen W2 in the screen direction F2 (90 degrees);
a set of always-on display resources J19, J20, and J21 corresponding to the small screen W2 in the screen direction F3 (180 degrees); and
a set of always-on display resources J22, J23, and J24 corresponding to the small screen W2 in the screen direction F4 (270 degrees).

Finally, the AOD dynamic style A is parsed, based on a screen ID and the screen direction, into 2*4 sets of always-on display resources of a total of 8*3 frames of images J1 to J24.

The AOD application module sends the eight sets of always-on display resources to the framebuffer.

The framebuffer stores the eight sets of always-on display resources J1 to J24, and returns a memory address D5 for reading the eight sets of always-on display resources to the AOD application module.

The AOD application module transmits a screen-off instruction carrying the memory address D5 to the low-power AOD application module in the SHP through the AOD driver module. After obtaining the always-on display event and the memory address D5 from the screen-off instruction, in response to the always-on display event, the low-power AOD application module may obtain the screen ID1 of the current active screen W1 and the screen direction F1, and trigger the low-power AOD service module to play a frame animation through the active screen W1.

The low-power AOD service module sequentially fetches the always-on display resources J1, J2, and J3 that match the screen ID1 of the screen W1 and the screen direction F1 from a storage area to which the memory address D5 points, and sends the three frames of images J1, J2, and J3 to the low-power display sending module for displaying the three frames of images J1, J2, and J3 in sequence.

As shown in FIG. 16A and FIG. 16B, when the SHP detects that the user folds the large screen of the terminal device outward and clockwise rotates the large screen of the terminal device by 90 degrees to use the small screen W2 on the left to display the picture in the screen direction F2, the low-power AOD application module in the SHP may directly trigger, in response to the operation, the low-power AOD service module to play the frame animation through the active screen W2.

The low-power AOD service module sequentially fetches the always-on display resources J16, J17, and J18 that match the screen ID2 of the screen W2 and the screen direction F2 from the storage area to which the memory address D5 points, and sends the three frames of images J16, J17, and J18 to the low-power display sending module for displaying the three frames of images J16, J17, and J18 in sequence.

It can be learned from the foregoing three example scenarios that, by using the always-on display method in this embodiment of this application, in the always-on display process of the terminal, even if the current screen status of the terminal changes due to the rotation and/or folding of the terminal by the user, the terminal does not need to wake up the AP to parse the always-on display resource. Instead, the SHP may directly obtain and display the buffered always-on display resource matching the current screen status. This ensures an always-on display effect, and reduces power consumption of the terminal device during the always-on display.

In the foregoing example scenario, the AOD application module sends a plurality sets of always-on display resources to the framebuffer, to obtain storage addresses of the plurality sets of always-on display resources. Then, a screen-off instruction carrying the storage address is sent to the low-power AOD application module, so that the low-power AOD application module can obtain an always-on display resource corresponding to the current screen status. In actual application, there may be a plurality of implementations for processing a memory address in a process of storing and fetching the always-on display resource. The following describes several implementations as examples.

It is assumed that there are N sets of always-on display resources, each set includes M frames of images, and a size of each frame of images is L.

The AOD application module and the low-power AOD application module agree on correspondences between N sets of always-on display resources and N displayable screen statuses of the terminal, and a different correspondence is identified by using a different flag (an always-on display resource flag).

For example, if N is 4, flag 1 may be used to identify the 0-degree screen state and the corresponding always-on display resource, flag 2 may be used to identify the 90-degree screen state and the corresponding always-on display resource, flag 3 may be used to identify the 180-degree screen state and the corresponding always-on display resource, flag4 may be used to identify the 270-degree screen state and the corresponding always-on display resource, and the like. This is not limited herein.

### Example implementation 1:

As shown in FIG. 17a, the AOD application module may calculate a total memory size Q1 occupied by N*M images, and then apply for a memory whose size is Q1 at one time. A kernel may return a memory address AD0 to the AOD application module.

When the AOD application module sends the screen-off instruction to the low-power AOD application module through an inter-kernel communication interface, the AOD application module may send parameters such as AD0, flags, N, M, and L to the low-power AOD application module together. The low-power AOD application module may calculate, based on flags, N, M, and L, an offset of M frames in a specific set of always-on display resources that need to be used relative to AD0 in the memory, and then fetch and send the M frames of memories in an L size for display.

For example, if N is 4, a data structure shown in the following Table 1 may be used in the screen-off instruction to carry parameters such as AD0, flags, N, M, and L.

**Table 1**

| | | | | | | | | | | | | |
|---|---|---|---|---|---|---|---|---|---|---|---|---|
| AD0 | Flag 1 | M | L | Flag 2 | M | L | Flag 3 | M | L | Flag 4 | M | L |

In some embodiments, if the AOD application module and the low-power AOD application module agree on a preset zoom ratio S for the always-on display resource, the preset zoom ratio S may also be carried in the screen-off instruction by using a data structure shown in the following Table 2:

**Table 2**

| | | | | | | | | | | | | | | | | |
|---|---|---|---|---|---|---|---|---|---|---|---|---|---|---|---|---|
| AD0 | Flag 1 | M | S | L | Flag 2 | M | S | L | Flag 3 | M | S | L | Flag 4 | M | S | L |

It may be understood that, in actual application, parameters such as AD0, flags, N, M, and L may also be carried in the screen-off instruction by using another data structure. This is not limited herein.

### Example implementation 2:

As shown in FIG. 17b, the AOD application module may calculate a total memory size Q2 occupied by M frames of images, and then apply for a memory whose size is Q2 once for each set of always-on display resources for N times in total, to obtain N memory addresses AD1 to ADN.

When the AOD application module sends the screen-off instruction to the low-power AOD application module through the inter-kernel communication interface, the AOD application module sends parameters such as AD1 to ADN, flags, N, M, and L to the AOD application module together. The low-power AOD application module obtains a first frame ADn of the matched M frames based on the current screen status, calculates, based on M and L, an offset of the address of the M frames to be sent and displayed relative to ADn, and fetches and sends the M frames of memories in the L size for display

It may be understood that, in this embodiment of this application, an uppercase N represents a total quantity of set of always-on display resources, an uppercase M represents a total quantity of frames of images of each always-on display resource, and both lowercase n and lowercase m represent intermediate amounts in a calculation process. For example, the lowercase n may represent a sequence number of a first frame of M frames of images that match a current screen status, and the lowercase m may represent a sequence number of a to-be-fetched image in a set of always-on display resources.

For example, if N is 4, a data structure shown in the following Table 3 may be used in the screen-off instruction to carry parameters such as AD1 to AD4, flags, N, M, and L.

**Table 3**

| | | | | | | | | | | | | | | | |
|---|---|---|---|---|---|---|---|---|---|---|---|---|---|---|---|
| AD1 | Flag 1 | M | L | AD2 | Flag 2 | M | L | AD3 | Flag 3 | M | L | AD4 | Flag 4 | M | L |

In some embodiments, if the AOD application module and the low-power AOD application module agree on the preset zoom ratio S for the always-on display resource, the preset zoom ratio S may also be carried in the screen-off instruction by using a data structure shown in the following Table 4:

**Table 4**

| | | | | | | | | | | | | | | | | | | | |
|---|---|---|---|---|---|---|---|---|---|---|---|---|---|---|---|---|---|---|---|
| AD1 | Flag 1 | M | S | L | AD2 | Flag 2 | M | S | L | AD3 | Flag 3 | M | S | L | AD4 | Flag 4 | M | S | L |

It may be understood that, in actual application, parameters such as AD1 to ADN, flags, N, M, and L may also be carried in the screen-off instruction by using another data structure. This is not limited herein.

### Example implementation 3:

As shown in FIG. 17c, the AOD application module may separately apply for a memory whose size is L for each frame of image once. A total of N*M memory addresses AD11 to ADNM are returned.

When the AOD application module sends the screen-off instruction to the low-power AOD application module through the inter-kernel communication interface, the AOD application module sends parameters such as AD11 to ADNM, flags, N, M, and L to the AOD application module together. The low-power AOD application module obtains a first frame ADn1 of the matched M frames based on the current screen status, and sequentially fetches and sends addresses ADn1 to ADnm of the M frames of images for display.

For example, if N is 2, and M is also 2, a data structure shown in the following Table 5 may be used in the screen-off instruction to carry parameters such as AD11 to AD22, flags, M, and L.

**Table 5**

| | | | | | | | | | |
|---|---|---|---|---|---|---|---|---|---|
| Flag 1 | M | L | AD11 | AD12 | Flag 2 | M | L | AD21 | AD22 |

In some embodiments, if the AOD application module and the low-power AOD application module agree on the preset zoom ratio S for the always-on display resource, the preset zoom ratio S may also be carried in the screen-off instruction by using a data structure shown in the following Table 6:

**Table 6**

| | | | | | | | | | | | |
|---|---|---|---|---|---|---|---|---|---|---|---|
| Flag 1 | M | S | L | AD11 | AD12 | Flag 2 | M | S | L | AD21 | AD22 |

It may be understood that, in actual application, parameters such as AD11 to ADNM, flags, N, M, and L may also be carried in the screen-off instruction by using another data structure. This is not limited herein.

In the always-on display method, because always-on display resources corresponding to all possible displayable screen statuses of the terminal device are parsed and buffered in the framebuffer when the terminal is screen-off, in a case in which a quantity of displayable screen statuses of the terminal is large, the always-on display resource that is buffered in the framebuffer may occupy large storage space. Therefore, before storing the always-on display resource obtained through parsing into the framebuffer, the terminal may first downsample, by using the preset zoom ratio S, on the always-on display resource obtained through parsing, to reduce the storage space occupied by the always-on display resource. After fetching the always-on display resource from the framebuffer, the low-power AOD application module first zooms in the always-on display resource by the preset zoom ratio S, and then sends the always-on display resource for display. In this way, a display effect of the always-on display resource can be ensured when the storage space occupied by the always-on display resource is reduced.

For example, FIG. 17d is an example schematic diagram in which an image in an always-on display resource is downsampled, buffered, fetched, zoomed in, and then sent for display.

For example, a pixel size of an animation image in the always-on display resource is 960 pixels*640 pixels. Different image storage formats occupy storage space of different sizes.

For example, if the RGB565 format is used and each pixel occupies 2 bytes, a memory occupied by a 960*640 image is 960*640*2=1228800 bytes=1200 KB.

For another example, when the ARGB8888 format is used and each pixel occupies 4 bytes, a memory occupied by the 960*640 image is 960*640*4=2,457,600 bytes=2400 KB.

The following uses an example in which the ARGB8888 format used by the 960 pixels*640 pixels in the terminal needs to occupy 2400 KB storage space. After the always-on display resource is obtained through parsing, the always-on display resource may be 2x downsampled, so that a pixel size of the animation image is reduced to 480 pixels*320 pixels, and correspondingly, storage space occupied by the animation image is reduced by 2*2 times. In this case, only 600 KB storage space needs to be occupied when the downsampled animation image is stored in the framebuffer.

If there are three images in one set of always-on display resources, and there are eight displayable screen statuses of the terminal, corresponding eight sets of always-on display resources need to store 24 animation images in total. If the eight sets of always-on display resources are directly stored in the framebuffer, storage space of 24*2400 KB=57600 KB=56.25 MB may be occupied.

However, after the always-on display resources are downsampled, because one animation image only needs to occupy 600 KB storage space, when the eight sets of always-on display resources that are downsampled are stored in the framebuffer, only 14400 KB (about 14 MB) storage space is required. This greatly reduces the storage space occupied by always-on display resources.

Because preset 2x downsampling is used during storage, when fetching the always-on display resource from the framebuffer, the low-power AOD application module first zooms in the always-on display resource by 2x based on the preset zoom ratio indicated in a received screen-off instruction. The fetched image of 480 pixels*320 pixels may be zoomed in to an image of 960 pixels*640 pixels whose pixel size is the same as that of the image that is not downsampled, and then the image is sent for display, thereby ensuring a display effect of the always-on display resource.

It should be noted that in actual application, according to different terminal screens, the preset zoom ratio S is not limited to 2 times. To prevent a possible distortion problem, the preset zoom ratio S may be obtained by adjusting between 1 to 2 according to an actual display effect. This is not limited herein.

The following describes an example terminal device 100 provided in embodiments of this application.

FIG. 18 is a schematic diagram of a structure of a terminal device 100 according to an embodiment of this application.

The following uses the terminal device 100 as an example to describe this embodiment in detail. It should be understood that the terminal device 100 may have more or fewer components than those shown in the figure, may combine two or more components, or may have different component configurations. The components shown in the figure may be implemented in hardware, software, or a combination of hardware and software that includes one or more signal processing and/or application-specific integrated circuits.

The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments of this application, the processor 110 may further include a low-power coprocessor, for example, an intelligent sensor hub processor (sensor hub processor, SHP). The low-power coprocessor may assist the AP in performing data processing, or independently perform data processing when the AP sleeps.

The controller may be a nerve center and a command center of the terminal device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may alternatively transmit the audio signal to the wireless communication module 160 through the PCM interface, to implement the function of answering the call through the Bluetooth headset. Both the I2S interface and the PCM interface may be used for audio communication.

The UART interface is a universal serial data bus for asynchronous communication. The bus may be a bidirectional communication bus. The bus converts to-be-transmitted data between serial communication and parallel communication. In some embodiments, the UART interface is generally used to connect the processor 110 and the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music through the Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI interface, to implement a display function of the terminal device 100.

The GPIO interface can be configured by software. The GPIO interface can be configured as a control signal or a data signal. In some embodiments, the GPIO interface may be configured to connect the processor 110 to the camera 193, the display 194, the wireless communication module 160, the audio module 170, the sensor module 180, and the like. The GPIO interface can also be configured as the I2C interface, the I2S interface, the UART interface, or the MIPI interface.

The SIM interface may be configured to communicate with the SIM card interface 195, to implement a function of transmitting data to the SIM card or reading data in the SIM card.

The USB interface 130 is an interface that conforms to a USB standard specification, and may be specifically a mini USB interface, a micro USB interface, a USB type-C interface, or the like. The USB interface 130 may be configured to connect to the charger to charge the terminal device 100, or may be configured to transmit data between the terminal device 100 and a peripheral device. It can also be used to connect to a headset and play audio through the headset. The interface may be further configured to connect to another electronic device like an AR device.

It may be understood that, an interface connection relationship between the modules shown in this embodiment of this application is merely an example for description, and does not constitute a structural limitation on the terminal device 100. In some other embodiments of this application, the terminal device 100 may alternatively use different interface connection manners in the foregoing embodiment, or use a combination of a plurality of interface connection manners.

The charging management module 140 is configured to receive charging input from the charger. The charger may be a wireless charger, or may be a wired charger.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover one or more communication bands. Different antennas may also be multiplexed to improve antenna utilization. For example, the antenna 1 may be multiplexed as a diversity antenna of the wireless local area network. In other embodiments, the antenna may be used in combination with a tuning switch.

The mobile communication module 150 may provide a wireless communication solution that is applied to the terminal device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into the electromagnetic wave for radiation through the antenna 1. In some embodiments, at least some functional modules in the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high-frequency signal. The demodulator is configured to demodulate the received electromagnetic wave signal into a low-frequency baseband signal. Then, the demodulator transmits the demodulated low-frequency baseband signal to the baseband processor for processing. The low-frequency baseband signal is processed by the baseband processor and then transferred to the application processor. The application processor outputs a sound signal by using an audio device (not limited to the speaker 170A, the receiver 170B, and the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the terminal device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into the electromagnetic wave for radiation through the antenna 2.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite-based augmentation system (satellite-based augmentation system, SBAS).

The terminal device 100 implements the display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display the image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the terminal device 100 may include one or N displays 194, where N is a positive integer greater than 1.

The terminal device 100 may implement a shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural network (neural network, NN) computing processor. With reference to a structure of a biological neural network, for example, with reference to a transmission mode between human brain neurons, the NPU quickly processes input information, and can continuously perform self-learning. Applications such as intelligent cognition of the terminal device 100, for example, image recognition, facial recognition, speech recognition, and text understanding, can be implemented by using the NPU.

The internal memory 121 may include one or more random access memories (random access memory, RAM) and one or more nonvolatile memories (nonvolatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The nonvolatile memory may include a magnetic disk storage device and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like according to storage specifications.

The random access memory may be directly read and written by using the processor 110. The random access memory may be configured to store an executable program (for example, machine instructions) in an operating system or another running program, and may be configured to store data of a user, data of an application, and the like.

The nonvolatile memory may also store the executable program, the data of the user, the data of the application, and the like, which may be loaded into the random access memory in advance for directly reading and writing by the processor 110.

The external memory interface 120 may be configured to connect to an external nonvolatile memory, to extend a storage capability of the terminal device 100. The external nonvolatile memory communicates with the processor 110 through the external memory interface 120, to implement a data storage function. For example, files such as music and videos are stored in the external nonvolatile memory.

The terminal device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal device 100 may be used to listen to music or answer a hands-free call through the speaker 170A.

The receiver 170B, also referred to as an "earpiece", is configured to convert an audio electrical signal into a sound signal. When a call is answered or voice information is received by using the terminal device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect the sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display 194, the terminal device 100 detects intensity of the touch operation by using the pressure sensor 180A. The terminal device 100 may further calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a short message application icon, an instruction for viewing a short message is performed. When a touch operation whose touch operation intensity is greater than or equal to the first pressure threshold is performed on the short message application icon, an instruction for creating a new short message is performed.

The gyro sensor 180B may be configured to determine a motion posture of the terminal device 100. In some embodiments, angular velocities of the terminal device 100 around three axes (namely, x, y, and z axes) may be determined by using the gyro sensor 180B. The gyro sensor 180B may be configured to implement image stabilization during shooting. For example, when the shutter is pressed, the gyro sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover by using the magnetic sensor 180D. In some embodiments, when the terminal device 100 is a flip phone, the terminal device 100 may detect the opening and closing of the flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal device 100 in various directions (generally on three axes). A magnitude and a direction of gravity may be detected when the terminal device 100 is stationary. The acceleration sensor 180E may be further configured to identify a posture of an electronic device, and is used in an application such as switching between a landscape mode and a portrait mode or a pedometer.

The distance sensor 180F is configured to measure a distance. The terminal device 100 may measure a distance by using infrared light or a laser. In some embodiments, in an image shooting scenario, the terminal device 100 may measure a distance by using the distance sensor 180F, to implement fast focusing.

The optical proximity sensor 180G may include, for example, a light-emitting diode (LED) and an optical detector, for example, a photoelectric diode. The light-emitting diode may be an infrared light-emitting diode. The terminal device 100 emits infrared light outward by using the light-emitting diode. The terminal device 100 detects infrared reflected light from a nearby object by using the photoelectric diode. When sufficient reflected light is detected, the terminal device 100 may determine that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The terminal device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a touch panel. The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of the touch event. Visual output related to the touch operation may be provided through the display 194. In some other embodiments, the touch sensor 180K may alternatively be disposed on a surface of the terminal device 100 at a location different from a location of the display 194.

The button 190 includes a power button, a volume button, and the like. The button 190 may be a mechanical button, or may be a touch button. The terminal device 100 may receive button input, and generate button signal input related to a user setting and function control of the terminal device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time prompt, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the terminal device 100. The terminal device 100 can support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The terminal device 100 interacts with a network by using the SIM card, to implement functions such as calling and data communication.

In this embodiment of this application, when detecting a screen-off operation of the user, the sensor module 180 may trigger the AP in the processor 110 to obtain, through parsing, a plurality of sets of always-on display resources that match a displayable screen status of the terminal and buffer the plurality of sets of always-on display resources in the internal memory 121. When the terminal device 100 performs always-on display by using the display 194, the sensor module 180 may detect and send a rotation and/or folding operation performed by the user on the terminal device to an SHP in the processor 110, and trigger the SHP in the processor 110 to read, from the internal memory 121, an always-on display resource that matches a current screen status of the terminal device 100, and perform display by using the display 194.

In this embodiment of this application, the processor 110 may invoke operation instructions stored in the internal memory 121, so that the terminal device 100 performs the always-on display method in this embodiment of this application.

FIG. 19 is a block diagram of a software structure of the terminal device 100 according to an embodiment of this application.

In a hierarchical architecture, software running on the AP of the terminal device 100 is divided into several layers, and each layer has a clear role and task. The layers communicate with each other through a software interface. In some embodiments, a system is divided into four layers: an application layer, an application framework layer, a runtime (runtime) and system library, and a kernel layer from top to bottom.

The application layer may include a series of application packages.

As shown in FIG. 19, the application packages may include application programs (which may also be referred to as applications) such as AOD Application Module, Settings, Calendar, Camera, Gallery, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a device manager, a window manager, a content provider, a view system, a phone manager, a resource manager, a notification manager, a power manager, and the like.

The device manager is configured to perform sensor management (sensor management), and allow the application at the application layer to access data of a sensor of the terminal device. When the data of the sensor changes, a sensor event is sent to an application with permission.

The window manager is configured to manage a window program. The window manager may obtain a size of a display, determine whether there is a status bar, lock a screen, capture the screen, receive view refresh data sent by the application, and the like.

The content provider is configured to: store and obtain data, and enable the data to be accessed by the application. The data may include a video, an image, audio, calls that are made and answered, a browsing history and bookmarks, an address book, and the like.

The view system includes visual controls like a control for displaying a text and a control for displaying an image. The view system may be configured to construct an application. A display interface may include one or more views. For example, a display interface including a short message notification icon may include a text display view and an image display view.

The phone manager is configured to provide a communication function for the electronic device 100, for example, management of a call status (including answering, declining, or the like).

The resource manager provides, for the application, various resources like a localized character string, an icon, an image, a layout file, and a video file.

The notification manager enables the application to display notification information in the status bar, and may be configured to convey a notification type message, which may automatically disappear after a short stay without user interaction. For example, the notification manager is configured to notify download completion, give a message notification, and the like. The notification manager may alternatively be a notification that appears in a top status bar of the system in a form of a graph or a scroll bar text, for example, a notification of an application running on the background, or may be a notification that appears on the display in a form of a dialog interface. For example, text information is displayed in the status bar, an announcement is given, the electronic device vibrates, or the indicator light blinks.

The runtime (runtime) includes a kernel library and a virtual machine. The runtime is responsible for scheduling and management of the system.

The kernel library includes two parts: a performance function that needs to be invoked by a programming language (for example, the Java language), and a system kernel library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a two-dimensional graphics engine (for example, SGL).

The surface manager is configured to: manage a display subsystem and provide fusion of two-dimensional (2-Dimensional, 2D) and three-dimensional (3-Dimensional, 3D) layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

In this embodiment of this application, the display driver includes an AOD driver module and a framebuffer.

A low-power AOD application module, a low-power AOD service module, and a low-power display sending module may run on an SHP of the terminal device 100.

When receiving the screen-off event sent by the power manager, the AOD application module may obtain, through parsing, a plurality of sets of always-on display resources that match a displayable screen status of the terminal device 100 and buffer the plurality of sets of always-on display resources in the framebuffer, and trigger, by using the AOD driver module, the low-power AOD application module on the SHP to perform always-on display. After the low-power AOD application module determines that a current screen status of the terminal changes because a user rotates and/or folds the terminal device 100, the low-power AOD application module may trigger the low-power AOD service module to read, from the framebuffer, an always-on display resource that matches the current screen status of the terminal device 100, and the low-power AOD service module may send the read always-on display resource to the low-power display sending module for display.

The following specifically describes an always-on display method in this embodiment of this application with reference to the foregoing example software and hardware structures of the terminal device 100, an information exchange diagram shown in FIG. 20A and FIG. 20B, and a schematic flowchart of always-on display shown in FIG. 21.

S2101: When a terminal device is screen-off, an AP in the terminal device parses a first AOD style into N sets of always-on display resources based on N displayable screen statuses of the terminal.

The first AOD style is an image or an animation that is to be displayed through always-on display of the terminal and that is selected by a user from settings of the terminal device. For example, the user may access a setting interface of the terminal device, and selects an AOD dynamic style A as the animation to be displayed through the always-on display, where the AOD dynamic style A is used as the first AOD style.

Optionally, that the terminal device is screen-off may be turning off a screen in response to an operation of the user, or may be turning off a screen after a screen-off condition that is set in the terminal is met, for example, duration in which no operation is performed in a standby state is longer than 15 minutes. This is not limited herein.

When an electronic device is screen-off, the AP in the terminal device may parse the first AOD style into the N sets of always-on display resources that match the N displayable screen statuses of the terminal. For a correspondence between the N sets of always-on display resources and the N displayable screen statuses of the terminal, refer to the description in (3) always-on display resource. Details are not described herein again.

Specifically, for example, if the first AOD style is the AOD dynamic style A, when the terminal device is screen-off, the AOD application module in the AP may parse the AOD dynamic style A into the N sets of always-on display resources that match the N displayable screen statuses of the terminal.

It may be understood that, an occasion in which the AP in the terminal device parses the first AOD style into the N sets of always-on display resources based on the N displayable screen statuses of the terminal is not limited to an occasion after the terminal device is screen-off. The action may also be performed on other occasions (for example, some occasions before the terminal device is screen-off).

In some embodiments, when the user determines that the first AOD style is the image or the animation to be displayed through the always-on display, the terminal device may start to parse the first AOD style into the N sets of always-on display resources based on the N screen displayable statuses of the terminal.

In some embodiments, when determining that the terminal device is screen-off after first preset duration, the terminal device may start to parse the first AOD style into the N sets of always-on display resources based on the N screen displayable statuses of the terminal.

There may be many other occasions for performing the action, provided that the occasion is before any one of the N sets of always-on display resources is used. This is not limited herein.

S2102: The terminal device buffers the N sets of always-on display resources in a memory to obtain a first memory address.

After obtaining the N sets of always-on display resources through parsing, the terminal device may buffer the N sets of always-on display resources in the memory, to obtain the first memory address, where N is a positive integer greater than 1.

Specifically, for example, after obtaining the N sets of always-on display resources through parsing, the AOD application module running on the AP may send the N sets of always-on display resources to the framebuffer. After buffering the N sets of always-on display resources, the framebuffer returns, to the AOD application module, a memory address D6 of the buffered N sets of always-on display resources.

Optionally, in some embodiments, when buffering the N sets of always-on display resources in the memory, the terminal device may downsample the N sets of always-on display resources by using a preset first multiple and then buffer the N sets of always-on display resources.

Optionally, as shown in FIG. 17a to FIG. 17c, based on different manners of applying for a memory of the N sets of always-on display resources, the first memory address may include one or more addresses. This is not limited herein.

In some embodiments of this application, the first memory address may also be referred to as a first storage address.

It may be understood that step S2102 may be performed after and before the terminal device is screen-off.

In some embodiments, after obtaining the N sets of always-on display resources through parsing, the terminal device may directly buffer the N sets of always-on display resources in the memory.

In some embodiments, after obtaining the N sets of always-on display resources through parsing, the terminal device may first store the N sets of always-on display resources in a file system, and then read and buffer the N sets of always-on display resources in the memory when the terminal device is screen-off.

In some embodiments, after obtaining the N sets of always-on display resources through parsing, the terminal device may first store the N sets of always-on display resources in the file system, and each time the electronic device is powered on again, read and buffer the N sets of always-on display resources in the memory.

There may be many other occasions for buffering the N sets of always-on display resources in the memory, provided that the occasion is before any one of the N sets of always-on display resources is used. This is not limited herein.

S2103: The AP in the terminal device sends a screen-off instruction to the SHP.

After obtaining the first memory address in which the N sets of always-on display resources are buffered, the AP in the terminal may send the screen-off instruction to the SHP, where the screen-off instruction carries the first memory address and an always-on display event that triggers dynamic display.

Specifically, for example, after receiving the memory address D6 that is returned by the framebuffer and that is for buffering the N sets of always-on display resources, the AOD application module running on the AP may add the memory address D6 to the screen-off instruction and send the screen-off instruction to the AOD driver module running on the AP. After receiving the screen-off instruction, the AOD driver module may send, by using an inter- kernel communication interface, the screen-off instruction to the low-power AOD application module running on the SHP.

S2104: The SHP in the terminal device obtains the first memory address and the always-on display event from the screen-off instruction.

Specifically, for example, after receiving the screen-off instruction sent by the AOD application module running on the AP, the low-power AOD application module running on the SHP may obtain, from the screen-off instruction, the memory addresses D6 of the N sets of always-on display resources and the always-on display event that triggers dynamic display.

S2105: The SHP in the terminal device determines that a current screen status of the terminal is a first screen status in response to the always-on display event.

For description of the current screen status of the terminal, refer to the description of (2) displayable screen statuses and current screen status of the terminal in the foregoing term explanation. Details are not described herein again. The first screen status is one of a plurality of displayable screen statuses of the terminal.

Specifically, for example, in response to the always-on display event, the low-power application module running on the SHP may obtain that the current screen status is N1, and trigger the low-power AOD service module to play a frame animation in the current screen status N1.

S2106: The SHP in the terminal device fetches, from storage space to which the first memory address points, a first always-on display resource that matches the first screen status.

The first always-on display resource is a set of always-on display resources that are in the N sets of always-on display resources and that match the first screen status.

Specifically, for example, the low-power AOD service module may fetch, from storage space to which the memory address D6 of the buffered always-on display resources points, an always-on display resource S1 that matches the current screen status N1.

Specifically, as described in FIG. 17a to FIG. 17c, the screen-off instruction carries flags respectively corresponding to each displayable screen status, and the flags may indicate, in the screen-off instruction, memory addresses that are in the first memory address and that are respectively corresponding to each set of always-on display resources.

S2107: The SHP in the terminal device sends the fetched first always-on display resource to a screen for display.

The first always-on display resource may be one or more images that match the first screen status, or may be one or more video segments, or the like. This is not limited herein.

Specifically, for example, if the fetched always-on display resource S1 is a plurality of consecutive animation images, the low-power AOD service module may send the always-on display resource S1 to the low-power display sending module, to send for display, so that the terminal displays the always-on display resource S 1 in the current screen status N1.

In this embodiment of this application, sending for display means sending for display on the screen. Details are not described subsequently.

Optionally, if the first always-on display resource is compressed by using the preset first multiple when the first always-on display resource is buffered in the memory, before sending the always-on display resource S1 for display, the low-power display sending module may first zoom in the always-on display resource by using the preset first multiple, and then send the always-on display resource for display.

S2108: The SHP in the terminal device determines that the current screen status of the terminal is a second screen status in response to a screen folding and/or rotation event.

In an always-on display process of the terminal device, if the user folds the screen and/or rotates the screen, the SHP in the terminal device is triggered to receive the screen folding and/or rotation event. The SHP determines that the current screen status is the second screen status in response to the screen folding and/or rotation event. The second screen status is another screen status that is in the plurality of displayable screen statuses and that is different from the first screen status.

Specifically, for example, the low-power AOD application module running on the SHP in the terminal device receives the screen folding and/or rotation event generated by the folding and/or rotation operation of the user on the screen of the terminal device, and in response to the screen folding and/or rotation event, the low-power AOD application module may determine that the current screen status is N2, and trigger the low-power AOD service module to play the frame animation in the current screen status N2.

S2109: The SHP in the terminal device fetches, from the storage space to which the first memory address points, a second always-on display resource that matches the second screen status.

The second always-on display resource is a set of always-on display resources that are in the N sets of always-on display resources and that match the second screen status. The second always-on display resource is different from the first always-on display resource.

Specifically, for example, the low-power AOD service module may fetch, from the storage space to which the memory address D6 of the buffered always-on display resources points, an always-on display resource S2 that matches the current screen status N2.

S2110: The SHP in the terminal device sends the fetched second always-on display resource to the screen for display.

The second always-on display resource may be one or more images that match the second screen status, or may be one or more video segments, or the like. This is not limited herein.

Specifically, for example, if the fetched always-on display resource S2 is a plurality of consecutive animation images, the low-power AOD service module may send the always-on display resource S2 to the low-power display sending module, to send for display, so that the terminal displays the always-on display resource S2 in the current screen status N2.

Optionally, if the first always-on display resource is compressed by using the preset first multiple when the first always-on display resource is buffered in the memory, before sending the always-on display resource S2 for display, the low-power display sending module may first zoom in the always-on display resource by using the preset first multiple, and then send the always-on display resource for display.

In this embodiment of this application, when the terminal device is screen-off, the AP may directly parse, based on the N displayable screen statuses of the terminal, the first AOD style into the N sets of always-on display resources for buffering. In the process of always-on display of the terminal, the SHP only needs to fetch, based on the current screen status of the terminal, a corresponding buffered always-on display resource for display. Even if the screen of the terminal is rotated and/or folded in the always-on display process, the AP does not need to be woken up to parse the always-on display resource, thereby reducing power consumption of the always-on display of the terminal.

FIG. 22 is a schematic diagram of view refresh interaction. In some always-on display modes, in an always-on display process of the terminal, if a sensor detects screen rotation, the sensor notifies applications installed on a terminal device of a screen rotation event, including an AOD application module and another application module. After receiving the screen rotation event, the another application module sends a view (view) refresh event to a window manager, where the view refresh event carries view refresh data A. After receiving the screen rotation event, the AOD application module also sends the view refresh event to the window manager, where the view refresh event carries view refresh data B. The window manager sends the view refresh data B sent by the AOD application module to a display driver for display.

However, in this mode, on one hand, in the always-on display process of the terminal, that the another application module receives the screen rotation event may cause the another application module to start running and wake up the AP, thereby increasing power consumption of the terminal in the always-on display process. On the other hand, the another application module sends the view refresh event to the window manager in the always-on display process, and even if the terminal processes the view refresh data in the view refresh event, the view refresh data is not displayed, thereby wasting power consumption of the terminal.

Therefore, this application provides another view refresh method, so that an application on the terminal needs to first register for screen-on state listening or screen-off state listening on the rotation and/or folding event. When the terminal is in the screen-off state, if the rotation and/or folding event is generated, the event is sent only to an AOD application module that is registered for screen-off state listening, and is not sent to another application module, thereby avoiding triggering startup of the another application module. In addition, in the screen-off state, the window manager may not receive the view refresh event sent by the another application, thereby avoiding waste of terminal power consumption caused by processing view refresh data of the another application module in the screen-off state.

The following specifically describes the view refresh method provided in this application with reference to a schematic diagram of the software structure of the terminal device 100 shown in FIG. 19 and a schematic diagram of example interaction of the view refresh method shown in FIG. 23A and FIG. 23B.

It may be understood that, in actual application, a CPU of the terminal device 100 to which the view refresh method is applied may include an SHP, or may not include an SHP. This is not limited herein.

In this example, that the CPU of the terminal device 100 does not include an SHP is used as an example.

The view refresh method can be divided into three phases:

### Phase 1: Classified listening type registration:

When the application in the terminal device 100 is started, the application needs to first register, with the device manager, a listening type for the rotation event and/or the folding event of the application: the screen-on state listening or the screen-off state listening.

The screen-off state listening means that the terminal device 100 only sends the rotation event and/or the folding event received by the terminal in the screen-off state to an application that is registered for the screen-off state listening type. The screen-on state listening means that the terminal device 100 only sends the rotation event and/or the folding event received by the terminal in the screen-on state to an application that is registered for the screen-on state listening type.

In addition, the terminal device 100 only receives the screen-off state listening on the rotation event and/or the folding event registered by the AOD application module. For another application installed on the terminal device 100, either the screen-on state listening on the rotation event and/or the folding event is registered, or listening on the rotation event and/or the folding event is not registered.

As shown in phase 1 in FIG. 23A, another application module 1, another application module 2, and the AOD application module are all installed on the terminal device 100.

The another application module 1 may not register listening on the rotation event and/or the folding event with the device manager. In this case, regardless of whether the terminal device 100 is in the screen-off state or the screen-on state, when receiving the rotation event and/or the folding event, the terminal device does not need to send the rotation event and/or the folding event to the another application module 1.

The another application module 2 registers screen-on state listening on the rotation event and/or the folding event with the device manager, so that the terminal sends the rotation event and/or the folding event to the another application module 2 only when receiving the rotation event and/or the folding event in the screen-on state; and if receiving the rotation event and/or the folding event in the screen-off state, the terminal does not send the rotation event and/or the folding event to the another application module 2.

The AOD application module registers screen-off state listening on the rotation event and/or the folding event with the device manager, so that the terminal sends the rotation event and/or the folding event to the AOD application module only when receiving the rotation event and/or the folding event in the screen-off state; and if receiving the rotation event and/or the folding event in the screen-on state, the terminal does not send the rotation event and/or the folding event to the AOD application module.

Phase 2: The event is not sent to the application that is registered for the screen-on state listening type.

After the terminal device 100 is screen-off, the AOD application module may send view refresh to the window manager, where the view refresh may carry the always-on display resource. The window manager sends the always-on display resource to the display driver for always-on display.

In the always-on display process of the terminal, if the sensor in the terminal device 100 detects that the user rotates and/or folds the screen, a screen rotation and/or screen folding event is generated. The terminal device 100 sends the screen rotation and/or screen folding event to the AOD application module that is registered for the screen-off state listening type, but does not send the screen rotation and/or screen folding event to the another application module 2 that is registered for the screen-on state listening type, or to the another application module 1 that is not registered for screen rotation and/or screen folding event listening.

After receiving the screen rotation and/or screen folding event, the AOD application module may obtain, through parsing, an always-on display resource that matches a current screen status after the rotation and/or screen folding, and add the always-on display resource to the view refresh event and send the view refresh event to the window manager. The window manager may send the always-on display resource to the display driver to update a picture displayed on the screen. For this process, refer to the description in the always-on display method provided in embodiments of this application. Details are not described herein again.

Phase 3: In the screen-off state, view refresh of an application other than the AOD application is not accepted.

In the always-on display process of the terminal, even if no screen rotation and/or screen folding event is received, another application running on the terminal device 100 may be triggered or activated by some other conditions, and send view refresh to the window manager. In the view refresh method in embodiments of this application, in the screen-off state, the window manager may not accept view refresh of the application other than the AOD application.

Optionally, it may be set that the window manager receives, in the screen-off state, only view refresh sent by the AOD application module, and refuses to receive view refresh sent by another application module. For example, the window manager may include a view refresh application whitelist in the screen-off state. In the screen-off state, only view refresh sent by an application in the view refresh application whitelist is accepted by the window manager. However, the view refresh application whitelist may include only one application, that is, the AOD application module.

It may be understood that in some embodiments, based on a user setting, another application may be further added to the view refresh application whitelist in the screen-off state. This is not limited herein.

Optionally, it may be set that the other applications do not send view refresh to the window manager in the screen-off state. For example, when the another application is installed, a determining mechanism is added to a view refresh sending procedure of the another application. The view refresh is allowed to be sent only when it is determined that a current state is not the screen-off state.

It may be understood that, in some other manners, the window manager may not accept view refresh of the application other than the AOD application in the screen-off state. This is not limited herein.

In embodiments of this application, the application installed on the terminal needs to register for the screen-on state listening or screen-off state listening on the rotation and/or folding event, and only the AOD application can register for the screen-off state listening. In this way, in the screen-off state of the terminal, the rotation and/or folding event is sent only to the AOD application, thereby avoiding triggering startup of another application module, and reducing power consumption of the terminal. In addition, in the screen-off state, the window manager may not receive the view refresh event sent by the application other than the AOD application, thereby avoiding waste of terminal power consumption caused by processing view refresh data of the another application module in the screen-off state.

It may be understood that, as shown in an example of a schematic diagram of information exchange shown in FIG. 24, the view refresh method in this embodiment of this application may also be used in combination with the always-on display method in embodiments of this application, to further reduce power consumption of the terminal device during the always-on display.

The AP in the terminal may register the AOD application for screen-off state listening on the rotation and/or folding event, and register the application other than the AOD application for screen-on state listening on the rotation and/or folding event.

When determining that the terminal is screen-off, the AP may perform steps S2101 to S2107 in the always-on display method shown in FIG. 21.

When the SHP receives the screen folding and/or rotation event, neither the SHP nor the AP sends the screen folding and/or rotation event to another application program that is registered for the screen-on state listening or that is not registered for screen folding and/or rotation listening, and only sends the screen folding and/or rotation event to the AOD application that is registered for the screen-off state listening, so that steps S2108 to S2110 in the always-on display method shown in FIG. 21 can be performed.

In the screen-off state, even if an application running on the AP other than the AOD application may be woken up due to some reasons, the AP does not respond to a view refresh request of the application other than the AOD application in the screen-off state.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments.

In the foregoing embodiments, according to the context, the term "when" used in the foregoing embodiments may be interpreted as "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used for implementation, all or part of the implementation may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device like a server or a data center integrated with one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the procedures of the methods in the foregoing embodiments may be implemented by a computer program instructing related hardware. The program may be stored in a computer-readable storage medium. When the program is executed, the procedures of the methods in embodiments may be performed. The foregoing storage medium includes any medium that can store program code, like a ROM or a random access memory RAM, a magnetic disk, or an optical disc.

## Claims

1. An always-on display method, comprising:
parsing, by a terminal device, a first screen-off style into N sets of always-on display resources based on a plurality of displayable screen statuses, wherein one set of always-on display resources matches one displayable screen status, and N is a positive integer greater than 1;
obtaining, by the terminal device, a first always-on display resource that is in the N sets of always-on display resources and that matches a first screen status when determining that the terminal device is screen-off and a current screen status is the first screen status, wherein the first screen status is a screen status of the plurality of displayable screen statuses; and
displaying, by the terminal device, the first always-on display resource through always-on display,
wherein the terminal device comprises an application processor and a low-power coprocessor, and the parsing, by a terminal device, a first screen-off style into N sets of always-on display resources based on a plurality of displayable screen statuses specifically comprises:
parsing (S2101), by the application processor, the first screen-off style into the N sets of always-on display resources based on the plurality of displayable screen statuses;
the method further comprises:
storing (S2102), by the terminal device, the N sets of always-on display resources to obtain a first storage address;
the obtaining, by the terminal device, a first always-on display resource that is in the N sets of always-on display resources and that matches a first screen status when determining that the terminal device is screen-off and a current screen status is the first screen status specifically comprises:
when the low-power coprocessor determines (S2105) that the terminal device is screen-off and the current screen status is the first screen status, obtaining (S2106), by the low-power coprocessor from storage space to which the first storage address points, the first always-on display resource that matches the first screen status; and
the displaying, by the terminal device, the first always-on display resource through always-on display specifically comprises:
sending (S2107), by the low-power coprocessor, the first always-on display resource to a screen for display,
wherein after the step of the displaying, by the terminal device, the first always-on display resource, the method further comprises:
determining, by the terminal device, that the current screen status is a second screen status in response to a screen folding and/or rotation operation performed by a user when the terminal device is in the screen-off state, wherein the second screen status is a screen status that is in the plurality of displayable screen statuses and that is different from the first screen status;
obtaining, by the terminal device, a second always-on display resource that is in the N sets of always-on display resources and that matches the second screen status; and
updating, by the terminal device, the always-on display to display the second always-on display resource.

2. The method according to claim 1, wherein the first screen-off style is content that is configured to be displayed through always-on display when the terminal device is in a screen-off state.

3. The method according to claim 1, wherein the plurality of displayable screen statuses are displayable screen statuses supported by the terminal device.

4. The method according to any one of claims 1 to 3, wherein the determining, by the terminal device, that the current screen status is a second screen status in response to a screen folding and/or rotation operation performed by a user when the terminal device is in the screen-off state specifically comprises:
determining (S2108), by the low-power coprocessor, that the current screen status is the second screen status in response to the screen folding and/or rotation operation performed by the user when the terminal device is in the screen-off state;
the obtaining, by the terminal device, a second always-on display resource that is in the N sets of always-on display resources and that matches the second screen status specifically comprises:
obtaining (S2109), by the low-power coprocessor from the storage space to which the first storage address points, the second always-on display resource that matches the second screen status; and
the updating, by the terminal device, the always-on display to display the second always-on display resource specifically comprises:
sending (S2110), by the low-power coprocessor, the second always-on display resource to the screen for display.

5. The method according to claim 4, wherein the terminal device comprises a sensor, and the determining (S2108), by the low-power coprocessor, that the current screen status is the second screen status in response to the screen folding and/or rotation operation performed by the user when the terminal device is in the screen-off state specifically comprises:
generating, by the sensor, a screen folding and/or rotation event in response to the screen folding and/or rotation operation performed by the user when the terminal device is in the screen-off state; and
determining, by the low-power coprocessor, that the current screen status is the second screen status in response to the screen folding and/or rotation event;

6. The method according to claim 5, wherein an always-on display application is installed on the terminal device, and a listening registration status of the always-on display application for the screen folding and/or rotation event in the terminal device is screen-off state listening, wherein the screen-off state listening means that the terminal device only sends the screen folding and/or rotation event received by the terminal device in the screen-off state to an application that is registered for the screen-off state listening; and
after the step of the generating, by the sensor, a screen folding and/or rotation event, the method further comprises:
when the terminal device is in the screen-off state, receiving, by the always-on display application running on the low-power coprocessor, the screen folding and/or rotation event.

7. The method according to claim 6, wherein a first application is installed on the terminal device, and a listening registration status of the first application for the screen folding and/or rotation event in the terminal device is screen-on state listening, wherein the screen-on state listening means that the terminal device only sends the screen folding and/or rotation event received by the terminal device in the screen-on state to an application that is registered for the screen-on state listening; and
when the terminal device is in the screen-off state, after the sensor generates the screen folding and/or rotation event, the first application does not receive the screen folding and/or rotation event.

8. The method according to claim 7, wherein the method further comprises:
when the terminal device is in the screen-off state, skipping responding, by the terminal device, to a view refresh request sent by the first application.

9. The method according to any one of claims 1 to 8, wherein when the current screen status of the terminal device is the first screen status, after the terminal device is clockwise rotated by 90 degrees, the current screen status of the terminal device is updated to the second screen status.

10. A terminal device (100), wherein the terminal device (100) comprises one or more processors and a memory, wherein
the memory is coupled to the one or more processors, the memory is configured to store computer program code, the computer program code comprises computer instructions, and the one or more processors invoke the computer instructions to enable the terminal device (100) to perform the method according to any one of claims 1 to 9.

11. A chip system, wherein the chip system is applied to a terminal device, the chip system comprises one or more processors, and the processor is configured to invoke computer instructions to enable the terminal device to perform the method according to any one of claims 1 to 9.

12. A computer program product comprising instructions, wherein when the computer program product runs on a terminal device, the terminal device is enabled to perform the method according to any one of claims 1 to 9.

13. A computer-readable storage medium, comprising instructions, wherein when the instructions are run on a terminal device, the terminal device is enabled to perform the method according to any one of claims 1 to 9.

## Patentansprüche

1. Verfahren für eine ständig eingeschaltete Anzeige ("Always-on-Display"), umfassend:
Aufgliedern, durch eine Endgerätvorrichtung, eines ersten Bildschirm-Aus-Stils in N Sätze von "Always-on-Display"-Ressourcen basierend auf mehreren anzeigbaren Bildschirmzuständen, wobei ein Satz von "Always-on-Display"-Ressourcen einem anzeigbaren Bildschirmzustand entspricht und N eine positive ganze Zahl größer als 1 ist;
Erhalten, durch die Endgerätvorrichtung, einer ersten "Always-on-Display"-Ressource, die in den N Sätzen von "Always-on-Display"-Ressourcen enthalten ist und die einem ersten Bildschirmzustand entspricht, wenn bestimmt wird, dass die Endgerätvorrichtung im Bildschirm-Aus-Zustand ist und ein aktueller Bildschirmzustand der erste Bildschirmzustand ist, wobei der erste Bildschirmzustand ein Bildschirmzustand der mehreren anzeigbaren Bildschirmzustände ist; und
Anzeigen, durch die Endgerätvorrichtung, der ersten "Always-on-Display"-Ressource durch das "Always-on-Display",
wobei die Endgerätvorrichtung einen Anwendungsprozessor und einen Niedrigenergie-Coprozessor umfasst und das Aufgliedern, durch eine Endgerätvorrichtung, eines ersten Bildschirm-Aus-Stils in N Sätze von "Always-on-Display"-Ressourcen basierend auf mehreren anzeigbaren Bildschirmzuständen insbesondere Folgendes umfasst:
Aufgliedern (S2101), durch den Anwendungsprozessor, des ersten Bildschirm-Aus-Stils in die N Sätze von "Always-on-Display"-Ressourcen basierend auf den mehreren anzeigbaren Bildschirmzuständen;
wobei das Verfahren ferner Folgendes umfasst:
Speichern (S2102), durch die Endgerätvorrichtung, der N Sätze von "Always-on-Display"-Ressourcen, um eine erste Speicheradresse zu erhalten;
wobei das Erhalten, durch die Endgerätvorrichtung, einer ersten "Always-on-Display"-Ressource, die in den N Sätzen von "Always-on-Display"-Ressourcen enthalten ist und die einem ersten Bildschirmzustand entspricht, wenn bestimmt wird, dass die Endgerätvorrichtung im Bildschirm-Aus-Zustand ist und ein aktueller Bildschirmzustand der erste Bildschirmzustand ist, insbesondere Folgendes umfasst:
wenn der Niedrigenergie-Coprozessor bestimmt (S2105), dass die Endgerätvorrichtung im Bildschirm-Aus-Zustand ist und der aktuelle Bildschirmzustand der erste Bildschirmzustand ist, Erhalten (S2106), durch den Niedrigenergie-Coprozessor von dem Speicherplatz, auf den die erste Speicheradresse zeigt, der ersten "Always-on-Display"-Ressource, die dem ersten Bildschirmzustand entspricht; und
wobei das Anzeigen, durch die Endgerätvorrichtung, der ersten "Always-on-Display"-Ressource durch das "Always-on-Display" insbesondere Folgendes umfasst:
Senden (S2107), durch den Niedrigenergie-Coprozessor, der ersten "Always-on-Display"-Ressource an einen Bildschirm zur Anzeige,
wobei nach dem Schritt des Anzeigens, durch die Endgerätvorrichtung, der ersten "Always-on-Display"-Ressource das Verfahren ferner Folgendes umfasst:
Bestimmen, durch die Endgerätvorrichtung, dass der aktuelle Bildschirmzustand ein zweiter Bildschirmzustand ist, als Reaktion auf einen Bildschirmklapp- und/oder -drehvorgang, der von einem Benutzer durchgeführt wird, wenn sich die Endgerätvorrichtung im Bildschirm-Aus-Zustand befindet, wobei der zweite Bildschirmzustand ein Bildschirmzustand ist, der in den mehreren anzeigbaren Bildschirmzuständen enthalten ist und der vom ersten Bildschirmzustand verschieden ist;
Erhalten, durch die Endgerätvorrichtung, einer zweiten "Always-on-Display"-Ressource, die in den N Sätzen von "Always-on-Display"-Ressourcen enthalten ist und die dem zweiten Bildschirmzustand entspricht; und
Aktualisieren, durch die Endgerätvorrichtung, des "Always-on-Displays", so dass es die zweite "Always-on-Display"-Ressource anzeigt.

2. Verfahren gemäß Anspruch 1, wobei der erste Bildschirm-Aus-Stil ein Inhalt ist, der dazu ausgelegt ist, durch das "Always-on-Display" angezeigt zu werden, wenn sich die Endgerätvorrichtung in einem Bildschirm-Aus-Zustand befindet.

3. Verfahren gemäß Anspruch 1, wobei die mehreren anzeigbaren Bildschirmzustände anzeigbare Bildschirmzustände sind, die durch die Endgerätvorrichtung unterstützt werden.

4. Verfahren gemäß einem der Ansprüche 1 bis 3, wobei das Bestimmen, durch die Endgerätvorrichtung, dass der aktuelle Bildschirmzustand ein zweiter Bildschirmzustand ist, als Reaktion auf einen Bildschirmklapp- und/oder -drehvorgang, der von einem Benutzer durchgeführt wird, wenn sich die Endgerätvorrichtung im Bildschirm-Aus-Zustand befindet, insbesondere Folgendes umfasst:
Bestimmen (S2108), durch den Niedrigenergie-Coprozessor, dass der aktuelle Bildschirmzustand der zweite Bildschirmzustand ist, als Reaktion auf den Bildschirmklapp- und/oder -drehvorgang, der vom Benutzer durchgeführt wird, wenn sich die Endgerätvorrichtung im Bildschirm-Aus-Zustand befindet;
wobei das Erhalten, durch die Endgerätvorrichtung, einer zweiten "Always-on-Display"-Ressource, die in den N Sätzen von "Always-on-Display"-Ressourcen enthalten ist und die dem zweiten Bildschirmzustand entspricht, insbesondere Folgendes umfasst:
Erhalten (S2109), durch den Niedrigenergie-Coprozessor von dem Speicherplatz, auf den die erste Speicheradresse zeigt, der zweiten "Always-on-Display"-Ressource, die dem zweiten Bildschirmzustand entspricht; und
wobei das Aktualisieren, durch die Endgerätvorrichtung, des "Always-on-Displays", so dass es die zweite "Always-on-Display"-Ressource anzeigt, insbesondere Folgendes umfasst:
Senden (S2110), durch den Niedrigenergie-Coprozessor, der zweiten "Always-on-Display"-Ressource an den Bildschirm zur Anzeige,

5. Verfahren gemäß Anspruch 4, wobei die Endgerätvorrichtung einen Sensor umfasst und das Bestimmen (S2108), durch den Niedrigenergie-Coprozessor, dass der aktuelle Bildschirmzustand der zweite Bildschirmzustand ist, als Reaktion auf den Bildschirmklapp- und/oder -drehvorgang, der vom Benutzer durchgeführt wird, wenn sich die Endgerätvorrichtung im Bildschirm-Aus-Zustand befindet, insbesondere Folgendes umfasst:
Erzeugen, durch den Sensor, eines Bildschirmklapp- und/oder -drehereignisses als Reaktion auf den Bildschirmklapp- und/oder -drehvorgang, der vom Benutzer durchgeführt wird, wenn sich die Endgerätvorrichtung im Bildschirm-Aus-Zustand befindet; und
Bestimmen, durch den Niedrigenergie-Coprozessor, dass der aktuelle Bildschirmzustand der zweite Bildschirmzustand ist, als Reaktion auf das Bildschirmklapp- und/oder -drehereignis.

6. Verfahren gemäß Anspruch 5, wobei eine "Always-on-Display"-Anwendung auf der Endgerätvorrichtung installiert ist und ein Überwachen-Registrierungsstatus der "Always-on-Display"-Anwendung für das Bildschirmklapp- und/oder -drehereignis in der Endgerätvorrichtung das Überwachen im Bildschirm-Aus-Zustand ist, wobei das Überwachen im Bildschirm-Aus-Zustand bedeutet, dass die Endgerätvorrichtung das durch die Endgerätvorrichtung im Bildschirm-Aus-Zustand empfangene Bildschirmklapp- und/oder -drehereignis nur an eine Anwendung sendet, die für das Überwachen im Bildschirm-Aus-Zustand registriert ist; und
wobei nach dem Schritt des Erzeugens, durch den Sensor, eines Bildschirmklapp- und/oder -drehereignisses das Verfahren ferner Folgendes umfasst:
wenn sich die Endgerätvorrichtung im Bildschirm-Aus-Zustand befindet, Empfangen, durch die "Always-on-Display"-Anwendung, die auf dem Niedrigenergie-Coprozessor läuft, des Bildschirm-Klapp- und/oder -drehereignisses.

7. Verfahren gemäß Anspruch 6, wobei eine erste Anwendung auf der Endgerätvorrichtung installiert ist und ein Überwachen-Registrierungsstatus der ersten Anwendung für das Bildschirmklapp- und/oder -drehereignis in der Endgerätvorrichtung das Überwachen im Bildschirm-Ein-Zustand ist, wobei das Überwachen im Bildschirm-Ein-Zustand bedeutet, dass die Endgerätvorrichtung das durch die Endgerätvorrichtung im Bildschirm-Ein-Zustand empfangene Bildschirmklapp- und/oder -drehereignis nur an eine Anwendung sendet, die für das Überwachen im Bildschirm-Ein-Zustand registriert ist; und
wenn sich die Endgerätvorrichtung im Bildschirm-Aus-Zustand befindet, nachdem der Sensor das Bildschirmklapp- und/oder -drehereignis erzeugt, die erste Anwendung das Bildschirmklapp- und/oder -drehereignis nicht empfängt.

8. Verfahren gemäß Anspruch 7, wobei das Verfahren ferner Folgendes umfasst:
wenn sich die Endgerätvorrichtung im Bildschirm-Aus-Zustand befindet, Überspringen, durch die Endgerätvorrichtung, der Reaktion auf eine Anforderung zur Ansichtaktualisierung, die durch die erste Anwendung gesendet wird.

9. Verfahren gemäß einem der Ansprüche 1 bis 8, wobei, wenn der aktuelle Bildschirmzustand der Endgerätvorrichtung der erste Bildschirmzustand ist, nachdem die Endgerätvorrichtung um 90 Grad im Uhrzeigersinn gedreht wurde, der aktuelle Bildschirmzustand der Endgerätvorrichtung auf den zweiten Bildschirmzustand aktualisiert wird.

10. Endgerätvorrichtung (100), wobei die Endgerätvorrichtung (100) einen oder mehrere Prozessoren und einen Speicher umfasst, wobei
der Speicher mit dem einen oder den mehreren Prozessoren gekoppelt ist, der Speicher dazu ausgelegt ist, Computerprogrammcode zu speichern, der Computerprogrammcode Computeranweisungen umfasst und der eine oder die mehreren Prozessoren die Computeranweisungen aufrufen, um die Endgerätvorrichtung (100) in die Lage zu versetzen, das Verfahren gemäß einem der Ansprüche 1 bis 9 durchzuführen.

11. Chipsystem, wobei das Chipsystem in einer Endgerätvorrichtung zum Einsatz kommt, das Chipsystem einen oder mehrere Prozessoren umfasst und der Prozessor dazu ausgelegt ist, Computeranweisungen aufzurufen, um die Endgerätvorrichtung in die Lage zu versetzen, das Verfahren gemäß einem der Ansprüche 1 bis 9 durchzuführen.

12. Computerprogrammprodukt, das Anweisungen umfasst, wobei, wenn das Computerprogrammprodukt auf einer Endgerätvorrichtung ausgeführt wird, die Endgerätvorrichtung in die Lage versetzt wird, das Verfahren gemäß einem der Ansprüche 1 bis 9 durchzuführen.

13. Computerlesbares Speichermedium, das Anweisungen umfasst, wobei, wenn die Anweisungen auf einer Endgerätvorrichtung ausgeführt werden, die Endgerätvorrichtung in die Lage versetzt wird, das Verfahren nach einem der Ansprüche 1 bis 9 durchzuführen.

## Revendications

1. Procédé d'affichage toujours actif, comprenant :
l'analyse syntaxique, par un dispositif terminal, d'un premier style d'écran éteint dans N ensembles de ressources d'affichage toujours actives sur la base d'une pluralité d'états d'écran affichables, dans lequel un ensemble de ressources d'affichage toujours actives correspond à un état d'écran affichable, et N est un entier positif supérieur à 1 ;
l'obtention, par le dispositif terminal, d'une première ressource d'affichage toujours active qui figure dans les N ensembles de ressources d'affichage toujours actives et qui correspond à un premier état d'écran lors de la détermination que l'écran du dispositif terminal est éteint et qu'un état d'écran actuel est le premier état d'écran, dans lequel le premier état d'écran est un état d'écran de la pluralité d'états d'écran affichables ; et
l'affichage, par le dispositif terminal, de la première ressource d'affichage toujours active par le biais d'un affichage toujours actif,
dans lequel le dispositif terminal comprend un processeur d'application et un coprocesseur basse puissance, et l'analyse syntaxique, par un dispositif terminal, d'un premier type d'écran éteint dans N ensembles de ressources d'affichage toujours actives sur la base d'une pluralité d'états d'écran affichables comprend spécifiquement :
l'analyse syntaxique (S2101), par le processeur d'application, du premier style d'écran éteint dans les N ensembles de ressources d'affichage toujours actives sur la base de la pluralité d'états d'écran affichables ;
le procédé comprenant en outre :
le stockage (S2102), par le dispositif terminal, des N ensembles de ressources d'affichage toujours actives pour obtenir une première adresse de stockage ;
l'obtention, par le dispositif terminal, d'une première ressource d'affichage toujours active qui figure dans les N ensembles de ressources d'affichage toujours actives et qui correspond à un premier état d'écran lors de la détermination que l'écran du dispositif terminal est éteint et qu'un état d'écran actuel est le premier état d'écran comprend spécifiquement :
lorsque le coprocesseur basse puissance détermine (S2105) que l'écran du dispositif terminal est éteint et que l'état d'écran actuel est le premier état d'écran, l'obtention (S2106), par le coprocesseur basse puissance à partir d'un espace de stockage vers lequel pointe la première adresse de stockage, de la première ressource d'affichage toujours active qui correspond au premier état d'écran ; et
l'affichage, par le dispositif terminal, de la première ressource d'affichage toujours active par le biais d'un affichage toujours actif comprend spécifiquement :
l'envoi (S2107), par le coprocesseur basse puissance, de la première ressource d'affichage toujours active à un écran en vue de son affichage,
le procédé comprenant en outre, après l'étape d'affichage, par le dispositif terminal, de la première ressource d'affichage toujours active :
la détermination, par le dispositif terminal, que l'état d'écran actuel est un second état d'écran en réponse à une opération de pliage et/ou de rotation d'écran réalisée par un utilisateur lorsque le dispositif terminal est dans l'état d'écran éteint, dans lequel le second état d'écran est un état d'écran qui figure dans la pluralité d'états d'écran affichables et qui diffère du premier état d'écran ;
l'obtention, par le dispositif terminal, d'une seconde ressource d'affichage toujours active qui figure dans les N ensembles de ressources d'affichage toujours actives et qui correspond au second état d'écran ; et
la mise à jour, par le dispositif terminal, de l'affichage toujours actif pour afficher la seconde ressource d'affichage toujours active.

2. Procédé selon la revendication 1, dans lequel le premier style d'écran éteint est un contenu configuré pour être affiché par le biais d'un affichage toujours actif lorsque le dispositif terminal est dans un état d'écran éteint.

3. Procédé selon la revendication 1, dans lequel la pluralité d'états d'écran affichables sont des états d'écran affichables pris en charge par le dispositif terminal.

4. Procédé selon l'une quelconque des revendications 1 à 3, dans lequel la détermination, par le dispositif terminal, que l'état d'écran actuel est un second état d'écran en réponse à une opération de pliage et/ou de rotation d'écran réalisée par un utilisateur lorsque le dispositif terminal est dans l'état d'écran éteint, comprend spécifiquement :
la détermination (S2108), par le coprocesseur basse puissance, que l'état d'écran actuel est le second état d'écran en réponse à l'opération de pliage et/ou de rotation d'écran réalisée par l'utilisateur lorsque le dispositif terminal est dans l'état d'écran éteint ;
l'obtention, par le dispositif terminal, d'une seconde ressource d'affichage toujours active qui figure dans les N ensembles de ressources d'affichage toujours actives et qui correspond spécifiquement au second état d'écran comprend :
l'obtention (S2109), par le coprocesseur basse puissance à partir de l'espace de stockage vers lequel pointe la première adresse de stockage, de la seconde ressource d'affichage toujours active qui correspond au second état d'écran ; et
la mise à jour, par le dispositif terminal, de l'affichage toujours actif pour afficher la seconde ressource d'affichage toujours active comprend spécifiquement :
l'envoi (S2110), par le coprocesseur basse puissance, de la seconde ressource d'affichage toujours active à l'écran en vue de son affichage.

5. Procédé selon la revendication 4, dans lequel le dispositif terminal comprend un capteur, et la détermination (S2108), par le coprocesseur basse puissance, que l'état d'écran actuel est le second état d'écran en réponse à l'opération de pliage et/ou de rotation d'écran réalisée par l'utilisateur lorsque le dispositif terminal est dans l'état d'écran éteint comprend spécifiquement :
la génération, par le capteur, d'un événement de pliage et/ou de rotation d'écran en réponse à l'opération de pliage et/ou de rotation d'écran réalisée par l'utilisateur lorsque le dispositif terminal est dans l'état d'écran éteint ; et
la détermination, par le coprocesseur basse puissance, que l'état d'écran actuel est le second état d'écran en réponse à l'événement de pliage et/ou de rotation d'écran.

6. Procédé selon la revendication 5, dans lequel une application d'affichage toujours active est installée sur le dispositif terminal et un état d'enregistrement d'écoute de l'application d'affichage toujours active pour l'événement de pliage et/ou de rotation d'écran dans le dispositif terminal est une écoute d'état d'écran éteint, dans lequel l'écoute d'état d'écran éteint signifie que le dispositif terminal n'envoie l'événement de pliage et/ou de rotation d'écran reçu par le dispositif terminal dans l'état d'écran éteint qu'à une application qui est enregistrée pour l'écoute d'état d'écran éteint ; et après l'étape de génération, par le capteur, d'un événement de pliage et/ou de rotation d'écran, le procédé comprend en outre :
lorsque le dispositif terminal est dans l'état d'écran éteint, la réception, par l'application d'affichage toujours active exécutée sur le coprocesseur basse puissance, de l'événement de pliage et/ou de rotation d'écran.

7. Procédé selon la revendication 6, dans lequel une première application est installée sur le dispositif terminal et un état d'enregistrement d'écoute de la première application pour l'événement de pliage et/ou de rotation d'écran dans le dispositif terminal est une écoute d'état d'écran allumé, dans lequel l'écoute d'état d'écran allumé signifie que le dispositif terminal n'envoie l'événement de pliage et/ou de rotation d'écran reçu par le dispositif terminal dans l'état d'écran allumé qu'à une application enregistrée pour l'écoute d'état d'écran allumé ; et
lorsque le dispositif terminal est dans l'état d'écran éteint, après que le capteur a généré l'événement de pliage et/ou de rotation d'écran, la première application ne reçoit pas l'événement de pliage et/ou de rotation d'écran.

8. Procédé selon la revendication 7, le procédé comprenant en outre :
lorsque le dispositif terminal est dans l'état d'écran éteint, le saut d'une réponse, par le dispositif terminal, à une demande de rafraîchissement de vue envoyée par la première application.

9. Procédé selon l'une quelconque des revendications 1 à 8, dans lequel lorsque l'état d'écran actuel du dispositif terminal est le premier état d'écran, après que le dispositif terminal a été tourné dans le sens horaire de 90 degrés, l'état d'écran actuel du dispositif terminal est mis à jour sur le second état d'écran.

10. Dispositif terminal (100), le dispositif terminal (100) comprenant un ou plusieurs processeurs et une mémoire, dans lequel
la mémoire est couplée aux un ou plusieurs processeurs, la mémoire est configurée pour stocker un code de programme informatique, le code de programme informatique comprend des instructions informatiques, et les un ou plusieurs processeurs appellent les instructions informatiques pour permettre au dispositif terminal (100) de réaliser le procédé selon l'une quelconque des revendications 1 à 9.

11. Système de puce, le système de puce étant appliqué à un dispositif terminal, le système de puce comprenant un ou plusieurs processeurs, et le processeur étant configuré pour appeler des instructions informatiques afin de permettre au dispositif terminal de réaliser le procédé selon l'une quelconque des revendications 1 à 9.

12. Produit programme d'ordinateur comprenant des instructions, lorsque le produit programme d'ordinateur est exécuté sur un dispositif terminal, le dispositif terminal étant en mesure de réaliser le procédé selon l'une quelconque des revendications 1 à 9.

13. Support de stockage lisible par ordinateur, comprenant des instructions, lorsque les instructions sont exécutées sur un dispositif terminal, le dispositif terminal étant en mesure de réaliser le procédé selon l'une quelconque des revendications 1 à 9.
